Europäisches Patentamt

European Patent Office

Office européen des brevets

(19)

(11) **EP 1 574 326 A1**

## (12) EUROPEAN PATENT APPLICATION
published in accordance with Art. 158(3) EPC

(43) Date of publication:
**14.09.2005 Bulletin 2005/37**

(21) Application number: **03780814.4**

(22) Date of filing: **17.12.2003**

(51) Int Cl.⁷: **B32B 5/26**

(86) International application number:
**PCT/JP2003/016138**

(87) International publication number:
**WO 2004/054795 (01.07.2004 Gazette 2004/27)**

(84) Designated Contracting States:
**AT BE BG CH CY CZ DE DK EE ES FI FR GB GR HU IE IT LI LU MC NL PT RO SE SI SK TR**

(30) Priority: **18.12.2002 JP 2002366313**
**18.12.2002 JP 2002366314**
**18.04.2003 JP 2003114922**
**20.06.2003 JP 2003177028**

(71) Applicant: **KANEKA CORPORATION**
**Osaka-shi, Osaka 530-8288 (JP)**

(72) Inventors:
• **KOYAMA, Ryohei KANEKA CORPORATION**
**Settsu-shi, Osaka 566-0072 (JP)**
• **UEDA, Toru**
**Nishinomiya-shi, Hyogo 669-1145 (JP)**

(74) Representative: **Brown, Fraser Gregory James**
**fJ Cleveland**
**40-43 Chancery Lane**
**London WC2A 1JQ (GB)**

## (54) LAMINATED SURFACE SKIN MATERIAL AND LAMINATE FOR INTERIOR MATERIAL

(57)     A breathable decorative layer is laminated onto a multilayer fiber composite, i.e., a breathable material, constituted from many layers of fibers. Between the breathable decorative layer and the breathable material, a substantially unbreathable film or a breathable sheet or film having through holes is interposed. Thus, a decorative multilayer material having high acoustic absorbing capability, processability, lightweightness, rigidity, heat resistance, thermal formability, recyclability, and designability can be provided at low cost. By laminating this decorative multilayer material on a laminated closed-cell foam material, a laminate for interior materials having acoustic absorbing capability can be provided at low cost despite the use of the laminated closed-cell foam material.

FIG. 1

**Description**

Technical Field

The present invention relates to decorative multilayer materials and laminates for interior materials. In particular, it relates to a decorative multilayer material that includes a breathable decorative layer and a breathable material and has excellent acoustic absorbing capability particularly for high frequencies (e.g., 4,000 Hz or higher).

The present invention also relates to a laminate for interior material that includes a laminated closed-cell foam material and the decorative multilayer material laminated thereon and has excellent lightweightness rigidity, designability, heat resistance, thermal formability, and recyclability.

Background Art

To pursue quietness in the room, materials having acoustic absorbing capability are widely used as the interior materials. There are various required performances other than acoustic absorbing capability depending on the place where the interior material is installed. For example, a vehicle interior material is required to have lightweightness, rigidity, designability, heat resistance, and thermal formability. In order to satisfy all the acoustic absorbing capability and these required performances, sheets that use urethane foam as the core material or sheets composed of inorganic fibers bonded with a thermoplastic resin have been commonly used.

All these materials have breathability. Thus, unbreathable layers must be formed to prevent contamination of the decorative materials. However, suppressing the breathability of the material may decrease the acoustic absorbing capability. Thus, an unbreathable layer is formed on a surface of the sheet or the material opposite of the noise incident surface and a breathable layer is formed on the noise incident surface to prevent a decrease in acoustic absorbing capability (e.g., refer to Japanese Unexamined Patent Application Publication Nos. 2002-36405 and 2003-225959).

However, in Japanese Unexamined Patent Application Publication No. 2002-36405, adjustment of through holes in a two-layer film laminated to adjust the breathability and processing of the film laminate is complicated, and the cost therefor is high. In Japanese Unexamined Patent Application Publication No. 2003-225959, although the breathability is adjusted by heating, it is difficult to stably and uniformly control the diameter of through holes and pitches. Moreover, not only the acoustic absorbing capability but also decorative bondability becomes unstable. Furthermore, the breathable materials set forth in these publications contain glass fibers or are laminated with glass fiber mats to achieve the required rigidity and heat resistance. Thus, there is a limit to weight reduction. Since glass fibers are contained, the recyclability is low, thereby making the materials not environmentally suitable.

To overcome the problem of recyclability, a method that uses a laminated sheet formed by laminating a non-foam layer composed of a thermoplastic resin on a foam core layer composed of a heat-resistant thermoplastic resin is available. For example, Japanese Registered Utility Model No. 2541890 discloses an application of vehicle roof liner including a foamed core layer of a polyphenylene ether resin and a non-foam layer composed of the same type of resin laminated thereon.

However, the laminated foam material is of a closed cell-type, i.e., unbreathable. Thus, most of the incident noise is reflected, and the acoustic absorbing capability is extremely low.

Thus, attempts have been made to impart acoustic absorbing capability to the laminated closed-cell foam material by laminating a acoustic absorbing decorative material, such as urethane slab (refer to Japanese Unexamined Patent Application Publication No. 55-11947, pp. 1-4) or ultrafine fibers (Japanese Unexamined Patent Application Publication No. 6-122349 (pp. 1-4) thereon. However, there is a problem of bulkiness and high cost.

Furthermore, an interior component and a vehicle acoustic absorbing material including inexpensive nonwoven cloth interposed between the decorative material and the material so that the nonwoven cloth can serve as a spring layer have been proposed (Japanese Unexamined Patent Application Publication Nos. 2002-127836 and 2002-215169). However, simply interposing and laminating needle-punched nonwoven cloth does not yield satisfactory acoustic absorbing property. Achievement of higher acoustic absorbing capability is desired.

Similarly, a kit for reducing noise in motor vehicles (ultra light-weight multifunctional sound-insulating kit), has been proposed (refer to PCT Japanese Translation Patent Publication No. 2000-516175). The kit is composed of a composite including a porous spring layer and a laminate laminated on the porous spring layer, the laminate including a microporous reinforcing layer and an ornamental layer (decorative layer), the microporous reinforcing layer being a fiber layer or a fiber/foam composite layer. However, in order to form the structural components with breathable materials only, either glass fibers must be used or the bulk must be increased to increase the number of layers, as is described above. Thus, problems such as low recyclability and high cost will occur.

In view of the above, although acoustic absorbing capability and the properties (lightweightness, rigidity, recyclability, and cost) required by the recent market of vehicle interior materials are desired to be simultaneously satisfied, no materials that satisfy all these requirements are not found so far.

An object of the present invention is to provide an inexpensive, decorative multilayer material having high processability and acoustic absorbing capability. Another object is to provide a laminate for interior material having excellent lightweightness, rigidity, heat resistance, thermal formability, recyclability, and designability by laminating the decorative multilayer material on the laminated closed-cell foam material.

Disclosure of Invention

In general, it is difficult to impart acoustic absorbing capability to an interior material that is inexpensive and has high processability, practical properties, and recyclability. It has been extremely difficult to impart acoustic absorbing capability to unbreathable materials, such as laminated closed-cell foam material.

Extensive investigations have been conducted to impart acoustic absorbing capability to interior materials. It was found that a decorative multilayer material having both required functions and high acoustic absorbing capability could be obtained by laminating a breathable material on one surface of a breathable decorative layer satisfying the performances required for decorative materials and by using a breathable material that is a multilayer fiber layer having a controlled fiber structure. Moreover, by laminating this decorative multilayer material on laminated closed-cell foam material, a laminate for interior materials having high acoustic absorbing capability can be obtained despite the use of the unbreathable material.

Furthermore, by interposing a substantially unbreathable thin film or a breathable sheet or breathable film having through holes with a controlled diameter (equivalent circular diameter, hereinafter also referred to as "diameter") at controlled pitches between a breathable decorative layer and a breathable material, a decorative multilayer material having improved acoustic absorbing capability can be obtained. Moreover, by laminating this decorative multilayer material on a laminated closed-cell foam material, a laminate for interior material that has higher acoustic absorbing capability compared to a laminate including an unbreathable material can be obtained.

That is, the present invention relates to a decorative multilayer material including a breathable decorative layer and a breathable material laminated on one surface of the breathable decorative layer.

The breathable material is preferably a multilayer fiber composite prepared by laminating layers of fibers. The ratio (planar ratio) of fibers lying in the direction of the plane of the multilayer fiber composite is preferably at least 50% of all fibers. The ratio (crossing ratio) between the amount of fibers lying in the machine direction of the multilayer fiber composite and the amount of fibers lying in a direction crossing the machine direction is preferably 50% to 200%.

Preferably, a substantially unbreathable film is interposed between the breathable decorative layer and the breathable material to form an integral composite. The thickness of this film is preferably 10 to 50 µm.

Preferably, a breathable film or sheet having through holes is interposed between the breathable decorative layer and the breathable material. The interfacial bonding strength between the sheet or film and the decorative layer and between the sheet or film and the breathable material is preferably 3 N/25 mm (width) or more in a 180° peel test.

The diameter (equivalent circular diameter) of the through holes is preferably 10 mm or less.

The breathable decorative layer and/or the breathable material is preferably a nonwoven cloth.

The breathable decorative layer and/or the breathable material is preferably composed of polyester fibers, natural fibers, reclaimed fibers, or heat-bondable fibers.

Preferably, the decorative multilayer material is laminated on a laminated closed-cell foam material. The laminated closed-cell foam material is preferably composed of a polyphenylene ether resin.

Brief Description of the Drawings

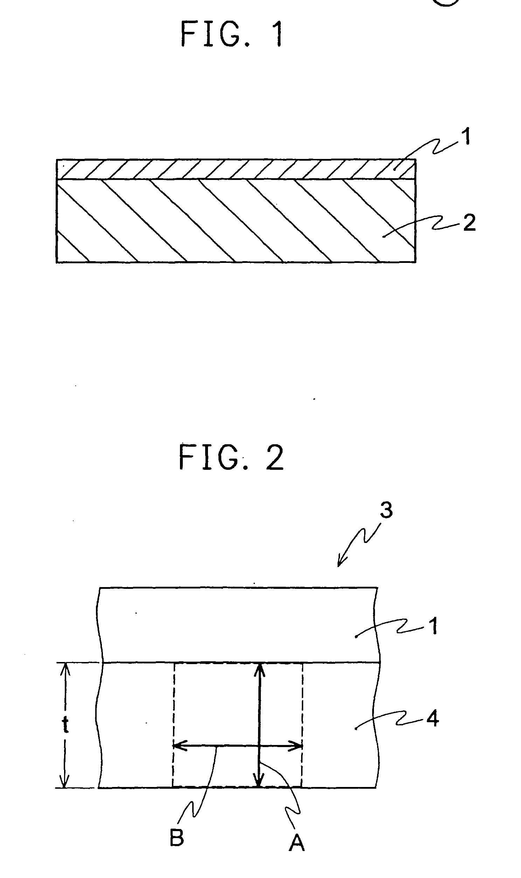

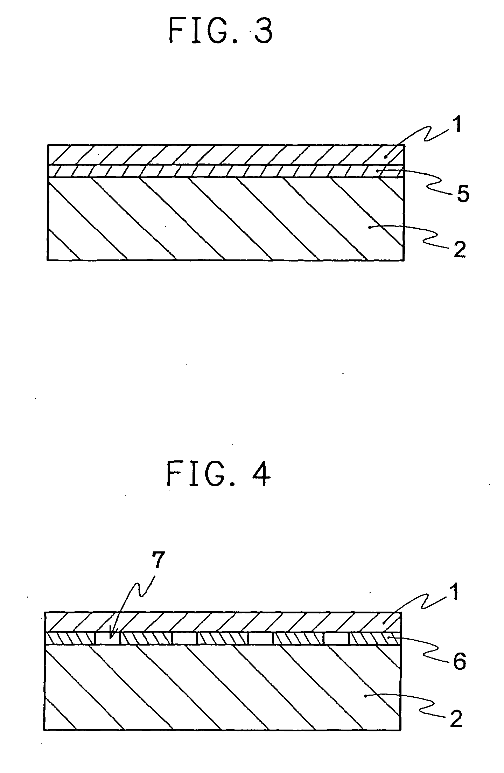

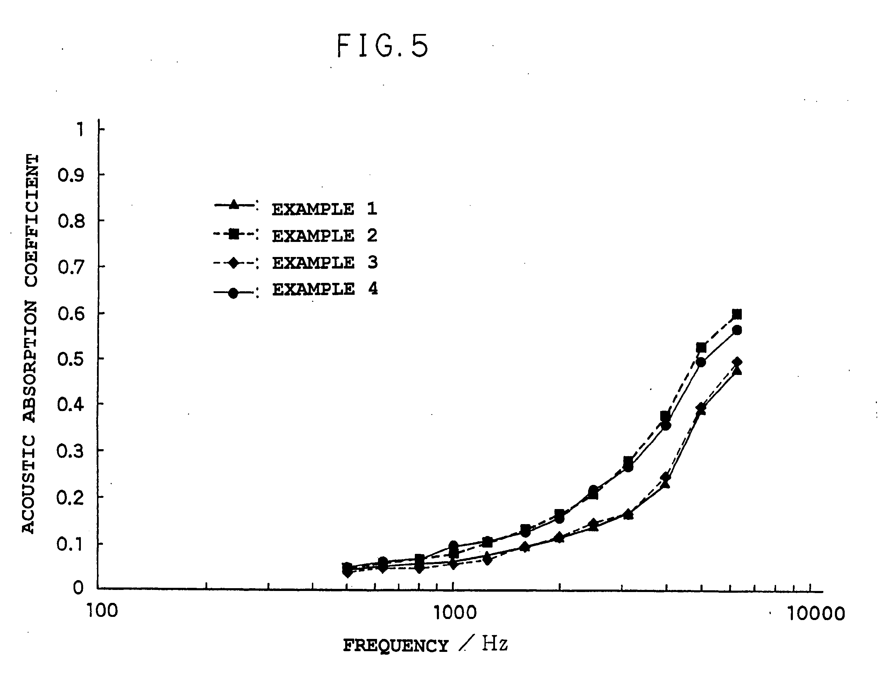

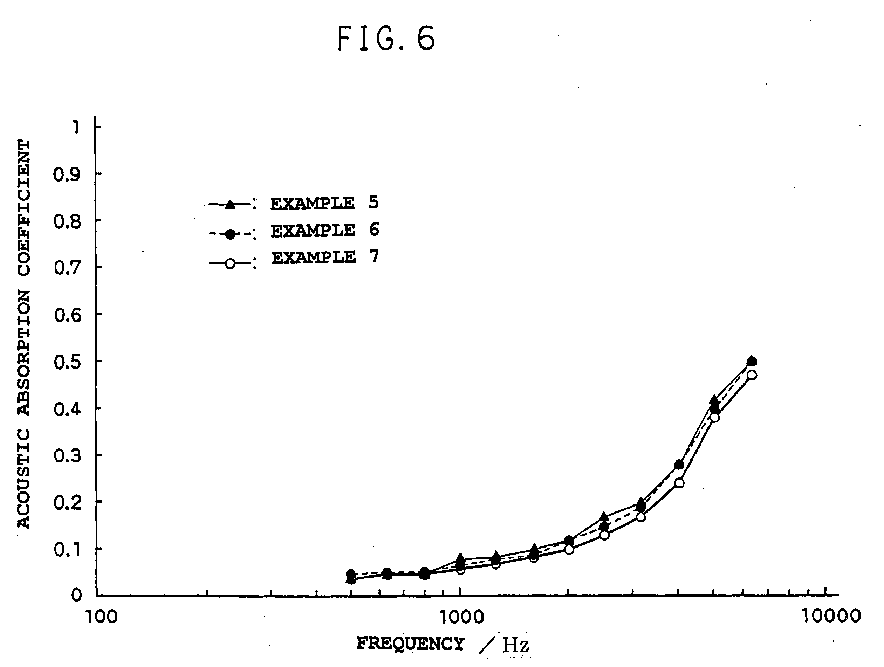

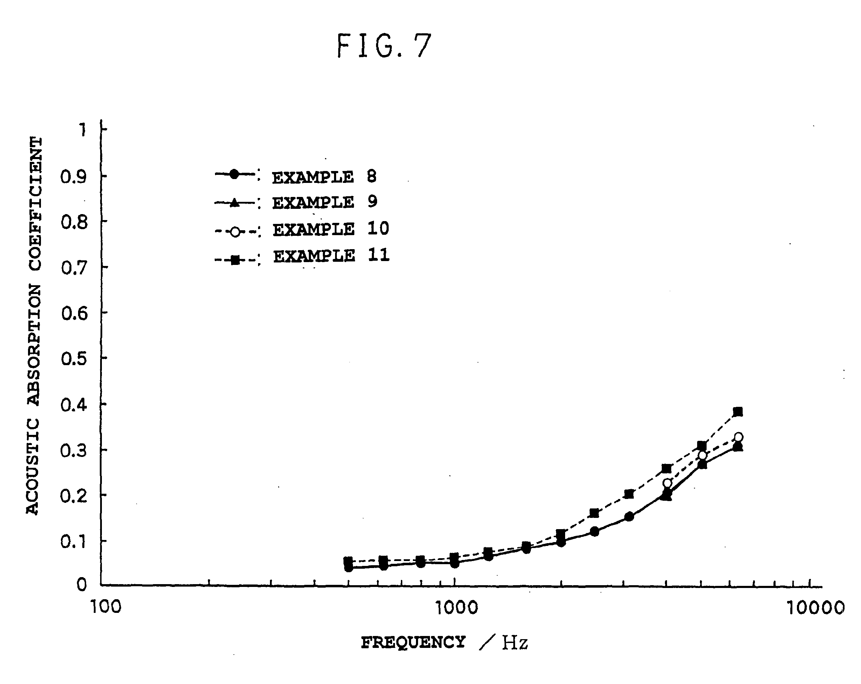

Fig. 1 is an example of a schematic view corresponding to claim 1. Fig. 2 is a diagram for explaining the method of calculating the planar ratio. Fig. 3 is an example of a schematic diagram corresponding to claim 5. Fig. 4 is an example of a schematic diagram corresponding to claim 7. Figs. 5 to 11 show acoustic absorbing capability of laminates prepared in EXAMPLES 1 to 21 and COMPARATIVE EXAMPLES 1 to 5 by showing acoustic absorption coefficients plotted against frequency.

Best Mode for Carrying Out the Invention

An inventive decorative multilayer material is mainly constituted from a breathable decorative layer and a breathable material, which is a multilayer fiber composite constituted from layers of fibers. The inventive decorative multilayer material may include a substantially unbreathable thin film or a breathable sheet or film having through holes with controlled diameters being interposed between the breathable decorative layer and the breathable material (a typical breathable material including a multilayer fiber composite).

An inventive laminate for interior materials includes the decorative multilayer material and a laminated closed-cell foam material.

Fig. 1 is an example of a schematic diagram of a decorative multilayer material constituted from a breathable decorative layer 1 and a breathable material 2.

The materials for the breathable decorative layer and the breathable material may be any breathable materials known to persons skilled in the art. Examples thereof include felt, nonwoven cloths, cotton, rock wool, woven fabric, glass wool, and open-cell foams. Among them, single-layer or multilayer fiber composites are preferable. Single-layer fiber composite are particularly preferable from the standpoint of cost, practicality, lightweightness, and recyclability.

The breathable decorative layer and the breathable material may be composed of the same or similar materials. Thus, the following descriptions on materials and preferable mixing ratios for the breathable decorative layer and the breathable material apply to both. However, since the breathable decorative layer is used by being exposed in the room or disposed as the outermost layer, the material for the breathable decorative layer must have ornamental property and designability superior to those of the breathable material, and, moreover, must be selected by taking into account typical practical properties, such as wear resistance, as interior materials.

The breathable decorative layer of the present invention may be composed of any material that has practical properties as typical decorative materials for interior materials. When a fiber composite is applied as the breathable decorative layer, known decorative materials for interior materials are preferable. Examples thereof include fiber composites composed of synthetic fibers, semi-synthetic fibers, natural fibers, and reclaimed fibers. In detail, woven cloths, knits, and nonwoven cloths composed of synthetic fibers such as polyester, polypropylene, polyamide (nylon), polyurethane, polyacryl, and polyacrylonitrile fibers; natural fibers such as wool, cotton, and hemp; and reclaimed fibers, such as rayon, are preferable for the use. Since the breathable decorative layer is where a design is applied (design face), the material therefor preferably has high wear resistance and high formability when the layer is expected to be installed to a position to which molding is conducted. The materials may be used in combination. Among these materials, nonwoven cloths composed of polyethylene terephthalate fibers are particularly preferable from the standpoint of cost and weather resistance.

The nonwoven cloths are produced by the same method for producing typical nonwoven cloths. The nonwoven cloths can be classified according to the production methods. Examples thereof include binder-bonded cloths, needle-punched cloths, spun-bonded cloths, spray-bonded cloths, and stitch-bonded cloths. When the breathable decorative layer is produced by needlepunching a nonwoven cloth, the number of punches and the needle stroke may be adjusted to increase the rigidity of the fiber composite by increasing the interlacement of the fibers to thereby impart designability and wear resistance.

Any of the above-described materials may be mixed with a binder (binder resin) that bonds the fibers to each other and/or heat-bondable fibers (low-melting-point fibers) so that the fibers can be interlaced by a chemical or mechanical process.

Examples of the binder resin include water-soluble and solvent-soluble resins, viscose solutions, emulsions, and synthetic resin powder. From the standpoints of water resistance, flexibility, and processability, emulsion-type binder resins are preferable. Examples thereof include an acrylonitrile/butadiene latex, a styrene/butadiene latex, an acrylate latex, and a vinyl acetate latex. These may be used alone or in combination.

Examples of the heat-bondable fibers (low-melting-point fibers) include fibers such as polyethylene, polypropylene, polyester having low melting point or low glass transition point (e.g., 110°C to 160°C), and polyamide; and core-in-sheath fibers containing low-melting-point or low-glass-transition-point polyolefin or polyester fibers as the sheath component and high-melting-point polyester fibers as the core component. When polyethylene terephthalate is used as the synthetic fibers, polyester fibers (including core-in-sheath fibers) having low melting point or low glass transition point (110°C to 160°C) are particularly preferable from the standpoint of recyclability.

The design face of the breathable decorative layer may be resin-coated to yield designability and wear resistance.

The weight of the breathable decorative layer is preferably 50 to 500 g/m$^2$, more preferably 50 to 400 g/m$^2$, and most preferably 50 to 300 g/m$^2$. From the standpoints of cost, practicability, and lightweightness, the weight is preferably 50 to 150 g/m$^2$.

The density of the breathable decorative layer is preferably 0.01 to 0.50 g/cm$^3$, and more preferably 0.05 to 0.25 g/cm$^3$. At a density less than 0.01 g/cm$^3$, the designability and the wear resistance tend to decrease. At a density exceeding 0.50 g/cm$^3$, the lightweightness, processability, formability, and the like tend to decrease.

Examples of using a multilayer fiber composite as the breathable material of the present invention will now be described.

In the present invention, the multilayer fiber composite is a structure including many layers of fibers. The multilayer fiber composite is made by stacking a plurality of mats, each of which is prepared by raveling fibers supplied from a machine direction and then blowing hot air to and/or needle-punching the stacked mats to integrally combine the mats. In other words, the multilayer fiber composite is obtained by the same method as the method for making a web, which is a preliminary process for making a typical nonwoven cloth. It should be understood that the method for obtaining the multilayer fiber composite described here is a mere example. The method may be any method that can form a multilayer structure of fiber layers.

In the present invention, a "multilayer fiber composite having a large degree of fiber crossing (high crossing ratio)" refers to a structure prepared by stacking a plurality of mats, each of which is prepared by raveling the fibers supplied from the machine direction (the longitudinal direction of the breathable decorative layer) and the traverse direction, and then blowing hot-air to and/or needle-punching the stack to the stacked mats to integrally combine these mats. This is different from the previously described typical process in which the fibers are supplied in the machine direction only. It should be understood that the method for obtaining the multilayer fiber composite having a high crossing ratio described here is also a mere example. The method may be any method that can form a multilayer structure of fiber layers.

The materials for the multilayer fiber composite produced by layering the fibers used in the present invention are basically the same as those described for the breathable decorative layer except that the multilayer fiber composite does not have to take designability into consideration. For confirmation, no limit is imposed on the type of material fibers, and any one of synthetic fibers, semi-synthetic fibers, natural fibers, and reclaimed fibers may be used. To be more specific, synthetic fibers such as polyester, polypropylene, polyamide (nylon), and polyacrylonitrile fibers; natural fibers such as wool, cotton, and cellulose; and reclaimed fibers, such as rayon, may be used. Among these, polyester fibers are preferable, and polyethylene terephthalate fibers having high heat resistance are particularly preferable.

Any of the above-described materials may be mixed with a binder (binder resin) that binds the fibers to each other and/or heat-bondable fibers (low-melting-point fibers) such as those described for the breathable decorative layer so that the fibers can be interlaced by a chemical or mechanical process.

From the standpoint of cost and processability, the material fibers are preferably polyester fibers and more preferably polyethylene terephthalate fibers having high shape-maintaining property during thermal molding.

When extreme thermal molding pressing (e.g., decorative integral thermal molding) is to be performed, the shape-maintaining property during thermal molding can be improved by adding reclaimed fibers, such as rayon, or natural fibers. In particular, from the standpoints of cost and processability, it is preferable to use 20 to 80 percent by weight and more preferably 40 to 70 percent by weight of reclaimed fibers, such as rayon, or natural fibers.

Furthermore, these fibers may be crimped and then used to improve the shape-maintaining property during thermal molding.

Preferable examples of the heat-bondable fibers include fibers such as polyethylene, polypropylene, and polyester having a low melting point or a low glass transition point (e.g., about 60 to 180°C, and preferably 110°C to 160°C), hereinafter also referred to as "low-melting-point polyester"; and core-in-sheath fibers containing low-melting-point or low-glass-transition-point polyolefin or polyester fibers as the sheath component and high-melting-point polyester fibers as the core component. When polyethylene terephthalate is used as the material fibers, it is particularly preferable to use the same type of polymer, i.e., polyester fibers (including core-in-sheath fibers) having low melting point or low glass transition point (e.g., 60°C to 180°C, more preferably 110°C to 160°C) from the standpoint of recyclability.

The content of the heat-bondable fibers in the entire multilayer fiber composite is preferably 5 to 30 percent by weight. At a content exceeding 30 percent by weight, the cost becomes excessively high, and the formability and the designability of the decorative multilayer material as a whole may be degraded due to increased binding force between fibers and generation of agglomerates of fibers. Moreover, the thickness of the fiber composite may become nonuniform. At a content less than 5 percent by weight, the effect of adding the heat-bondable fibers is not easily achieved.

The fineness of the fibers is preferably 1 to 10 denier (1.1 to 11.1 dtex). At a fineness of less than 1 denier, the shape-maintaining property, i.e., the property to maintain fiber orientation, tends to be low, and the permanent set in fatigue of the whole fibers tends to be large. At a fineness exceeding 10 denier, the fibers may separate from each other or produce wrinkles, thereby degrading the designability of the decorative multilayer material as a whole (in particular, when the material is used at the location to be molded). The fineness of the fibers is most preferably 2 to 7 denier (2.2 to 7.8 dtex).

The weight of the fibers constituting the multilayer fiber composite is 50 to 400 $g/m^2$ and preferably 50 to 300 $g/m^2$. From the standpoints of cost, practicability, lightweightness, and increased acoustic absorbing capability, the weight is more preferably 50 to 200 $g/m^2$, and most preferably 100 to 150 $g/m^2$.

The densities of the breathable decorative layer and the multilayer fiber composite significantly affect the acoustic absorbing capability of the decorative multilayer material. The density of the breathable decorative layer is preferably equal to or greater than the density of the multilayer fiber composite. The effect of improving the acoustic absorbing capability can be further increased by making the density of the breathable decorative layer different from the density of the multilayer fiber composite. To be more specific, the density of the breathable decorative layer is preferably at least 1.5 times the density of the multilayer fiber composite.

When the densities are adjusted to such ratios, the breathable decorative layer can function as the decorative material, and at the same time high acoustic absorbing capability can be yielded as the entire decorative multilayer material.

The density of the multilayer fiber material is preferably low. The density is preferably 0.1 g/cm$^3$ or less, more preferably 0.01 to 0.10 g/cm$^3$, and most preferably 0.03 g/cm$^3$ to 0.10 g/cm$^3$. When the density of the multilayer fiber composite is less than 0.01 g/cm$^3$, the practical properties, such as interfacial adhesiveness between the breathable decorative layer and the multilayer fiber composite, the interfacial adhesiveness between the interposed sheet or film and the multilayer fiber composite, and the interfacial adhesiveness of the material for interior materials and the multilayer fiber composite tend to decrease. At a density exceeding 0.1 g/cm$^3$, the lightweightness may be degraded.

The thickness of the multilayer fiber composite is preferably 0.5 to 10.0 mm and more preferably 2.0 to 4.0 mm. At a thickness less than 0.5 mm, high acoustic absorbing property may not be expected. At a thickness exceeding 10.0 mm, the formability, processability, and the like tend to be degraded.

A process similar to the process of producing a web, which is the preliminary process for making a typical nonwoven cloth, may be employed to produce the multilayer fiber composite using the materials described above. During the process, the amount of the heat-bondable fibers and the number of needle punching can be adjusted to control the bulkiness and the flexibility. For example, mats prepared by a carding method while raveling the fibers supplied from a machine direction are stacked, and the stacked mats are integrally combined by blowing hot air and/or needle punching.

The multilayer fiber composite having a high crossing ratio can be made by, for example, stacking a plurality of mats, each of which is prepared by raveling the fibers supplied from the machine direction and the traverse direction, and then blowing hot-air to and/or needle-punching the stacked mats to integrally combine the mats. This is different from the previously described typical process in which the fibers are supplied in the machine direction only.

According to a typical method for making a nonwoven cloth, a multilayer fiber composite prepared as above is subjected to needle punching or the like to interlace the fibers constituting the multilayer fiber composite. By this operation, the practical properties, such as rigidity, processability, and dimensional stability, can be imparted.

However, in a typical nonwoven cloth, most of the fibers originally arranged in machine direction are rearranged to align in a direction parallel to the thickness direction as a result of the needle punching. Thus, the transmitting property relative to normal incident noise is increased, and the ratio of the simple incident noise immediately reflected thereat is also increased, thereby resulting in a significantly large decrease in acoustic absorbing capability.

In the present invention, when the multilayer fiber composite composed of mats prepared by the carding method is needle-punched, the number of needle punching is decreased to a number lower than the conventional number, and the depth of the strokes is reduced to leave many fibers arranged in the plane. A multilayer fiber composite having a large amount of the fibers arranged in the plane, i.e., a high planar ratio, can be obtained thereby.

Depending on the method for laminating the multilayer fiber composite and the breathable decorative layer, the arrangement of the fibers may change. Preferably, the final amount of the fibers arranged in the machine direction with respect to all the fibers in the multilayer fiber composite (i.e., the planar ratio) is preferably at least 50%, more preferably at least 60%, and most preferably at least 66% after the lamination of the multilayer fiber composite and the breathable decorative layer. Within these ranges, the amount of the fibers arranged in a machine direction is greater than the amount of the fibers arranged at random. Thus, the multilayer fiber composite can efficiently work against incident noise, and satisfactory acoustic absorbing capability can be achieved.

The planar ratio is determined as follows. As shown in Fig. 2, a decorative multilayer material 3 is cut in the thickness direction, and a SEM micrograph of a cross-section 4 of the multilayer fiber composite is taken. While defining the thickness direction as the vertical direction, a vertical line A and a horizontal line B orthogonally intersecting each other are drawn at desired locations of a square having a side corresponding to the thickness t of the multilayer fiber component. The numbers of fibers intersecting the vertical line A and the horizontal line B are determined. The planar ratio is calculated by the equation below:

$$\text{planar ratio (\%)} = 100 \times a/(a + b)$$

wherein a represents the number of the fibers intersecting the vertical line and b represents the number of the fibers intersecting the horizontal line. The planar ratio is calculated at five positions, and the average value is defined as the planar ratio.

A multilayer fiber composite having a large degree of crossing (crossing ratio: 50 to 200%) prepared by supplying fibers in the machine direction and a direction perpendicular to this direction is effective for yielding acoustic absorbing capability and achieves a significantly large effect because of the enhanced interlacing of the fibers. The crossing ratio is preferably 75% to 150%.

The crossing ratio is determined by the equation below to define the state of crossing of the fibers:

$$\text{crossing ratio (\%)} = 100 \times P/Q$$

wherein Q is the amount of fibers supplied in the direction of flow (machine direction) of the fiber laminate constituting the multilayer fiber composite and P is the amount of fibers supplied in a direction orthogonal to the machine direction (traverse direction).

When the fibers are supplied in directions other than the machine direction, the amount of the fibers supplied in a direction closest to the machine direction of the multilayer fiber composite is defined as Q and that of the other is defined as P.

In the multilayer fiber composite of the present invention, the planar ratio and the crossing ratio are adjusted to be high to improve the acoustic absorbing capability. Thus, although the acoustic absorbing capability is higher than that of conventional nonwoven decorative material, the surface quality and the designability tend to be insufficient, and the multilayer fiber composite may not be able to serve as the decorative layer. Thus, in this invention, the multilayer fiber composite is laminated on a typical breathable decorative layer having satisfactory surface quality and designability, so that both the functions as the decorative layer and the acoustic absorbing capability, which is the object of the present invention, can be achieved.

As stated in the previous section, the arrangement of the fibers may change to thereby affect the planar ratio depending on the method of laminating the multilayer fiber composite on the breathable decorative layer. The meaning of this is as follows. When the multilayer fiber composite is laminated on the breathable decorative layer with an adhesive, as described below, the arrangement of the fibers of the multilayer fiber composite, i.e., the planar ratio, does not change. However, when the multilayer fiber composite is laminated on the breathable decorative layer by needle punching, the arrangement of the fibers of the multilayer fiber composite changes. The meaning of the previous statement is that in this invention, the planar ratio of the multilayer fiber composite refers to the final planar ratio of the multilayer fiber composite after the multilayer fiber composite is combined with the breathable decorative layer.

When the multilayer fiber composite is not used as the breathable material, any breathable material that can structurally function as a spacer can be used. Examples thereof include felt and porous materials that can be used as part of the decorative material. Examples of the porous materials include open-cell foams such as soft urethane foams.

The acoustic absorbing capability of the above-described material can be controlled by adjusting the airflow resistance. Thus, the fiber composite and the porous materials can be processed to have acoustic absorbing capability suitable for usage by changing the internal breathability through controlling the production method.

Examples of the method for laminating the breathable decorative layer with the breathable material (in particular, the multilayer fiber composite) include a lamination method using an adhesive, a method including a moderate degree of needling, and a method of blending heat-bondable fibers and conducting heat bonding. Two or more of these methods may be used in combination.

The adhesive used in laminating the breathable decorative layer and the breathable material is preferably breathable in order to achieve the acoustic absorbing capability. An example of the bonding method using a breathable adhesive layer is a method including temporarily tacking the breathable material and the breathable decorative layer using a nonwoven cloth-type hot-meltable adhesive having breathability due to the network structure of a low-melting-point polyethylene, low-melting-point polyester, polyamide, or the like, and blowing hot air to melt the breathable hot-meltable adhesive to form a thermally integral composite. Other examples include a method that uses a urethane, epoxy, or silicone adhesive layer and a method including applying a latex, such as an acrylonitrile/butadiene latex, a styrene/butadiene latex, a vinyl acetate latex, or an acrylate latex, onto an adherend surface of the breathable decorative layer or the breathable material, combining and press-bonding together the breathable decorative layer and the breathable material, and drying the latex to form an integral composite. Note that the adhesive layer formed by drying the latex applied onto the adherend surface of the decorative layer and/or the multilayer fiber composite has satisfactory breathability. Moreover, the breathable decorative layer and the multilayer fiber composite can be bonded by adjusting the amount of the binder fibers contained in the material of the multilayer fiber composite and/or the breathable decorative layer. As the method for bonding the breathable decorative layer to the multilayer fiber composite, any one or combination of the above-described methods may be employed.

The substantially unbreathable film may be any commercially available, known film that can substantially eliminate transmission of acoustic waves or produce vibration against acoustic waves. In the present invention, a completely unbreathable film is most preferred as the substantially unbreathable film. However, as described above, the film may have some small through holes as long as the level in which the decorative multilayer material including the film can structurally produce vibrations in response to acoustic pressures, i.e., at the level in which the acoustic absorbing ratio is 50% or more near 6,300 Hz, for example.

Fig. 3 is an example of a schematic diagram of a decorative multilayer material constituted from a breathable decorative layer 1, an unbreathable film 5, and a breathable material 2.

In order to produce vibration for acoustic waves, the film must be thin. Here, "thin" means that the thickness

is 200 μm or less. At a thickness over 200 μm, the film functions as a reflector for the acoustic waves, and rarely produces vibration suitable for acoustic absorption. At a thickness smaller than 5 μm, there are problems of processability, formability, and rigidity. Moreover, when the film is interposed for heat bonding, sufficient anchoring effects are not achieved, and the interfacial bonding between the breathable decorative layer and the breathable material tends to be unstable. Thus, the thickness is preferably 5 to 200 μm from the standpoints of lightweightness, formability, processability, bonding stability, and the like. More preferably, the thickness is 10 to 50 μm from the standpoint of high acoustic absorbing capability.

The unbreathable film need not be bonded to the breathable decorative layer and/or the breathable material over the entire face unless there is a practical problem with bonding. Rather, the presence of scattered unbonded portions is preferable. To be more specific, the interposed film preferably has 5% to 90% and more preferably 30% to 80% of unbonded portions in the entire area. At less than 5%, high acoustic absorbing capability cannot be expected. At exceeding 90%, the practicability is not achieved from the standpoint of bonding strength and designability.

The breathable sheet or film having through holes may be composed of any material, such as resin or metal, as long as the sheet or film has through holes sufficient for acoustic waves to pass through and the decorative multilayer material including the sheet or film can form an integrated structure. From the standpoint of practical properties, the interfacial bonding strength between the breathable decorative layer and the breathable material (hereinafter simply referred to as "interfacial bonding strength") in the final form is preferably 3 N/25 mm (width) or more in a 180° peel test. More preferably, the interfacial bonding strength is 5 N/25 mm (width) or more from the standpoint of reliable bondability.

By stably bonding a perforated film layer on the breathable material, an effect similar to that of a Helmholtz resonator is generated, thereby achieving high acoustic absorbing capability.

At an interfacial bonding strength of 3 N/25 mm (width) or less, peeling easily occurs inside the decorative multilayer material, and the resulting product becomes defective.

Here, the 180° peel test is conducted as follows. Using a tensile tester, the breathable decorative layer and the breathable material of a specimen of the decorative multilayer material having a width of 25 mm are respectively chucked and the strength is measured by peeling for 10 seconds at an angle of 180° at 23°C at a peeling speed of 200 mm/min. According to this test, for example, in a decorative multilayer material having a structure shown in Fig. 4, the interface with smaller bonding strength selected from the interface between the breathable decorative layer 1 and a breathable sheet or film 6 having through holes 7 and the interface between the breathable material 2 and the breathable sheet or film 6 having the through holes 7 will be separated. The average of the peaks of time-stress curves obtained by the test is defined as the interfacial bonding strength.

The "sheet" in the present invention has a thickness exceeding 200 μm, and the "film" in the present invention has a thickness of 200 μm or less.

From the standpoints of lightweightness, processability, and formability, it is preferable to use a film. A film having a thickness of 5 to 200 μm is more preferable. A film having a thickness of 10 to 50 μm is most preferable.

Where there is no lightweightness or formability requirement, either sheet or film may be used, and the upper limit of the thickness is not particularly set.

Here, "through holes" refer to holes that do not inhibit transmission of acoustic wave in the holes, as is previously described. In particular, the diameter of the through holes in the final form is preferably about 0.5 to 10 mm from the standpoint of imparting high acoustic absorbing capability. The pitch of the through holes is preferably about 0.5 to 100 mm. When the pitch is less than 0.5 mm, the interposed sheet or film works as if it is substantially unbreathable to the incident acoustic waves, and high acoustic absorbing capability cannot be achieved. This is because, unlike the above-described, interposed substantially unbreathable film having an interfacial bonding strength in the final form of 3 N/ 25 mm (width) or more in a 180° peel test and forming an integrated structure with the breathable decorative layer and the breathable material, the sheet or the film does not achieve vibrational acoustic absorption. Moreover, when the diameter of the through hole is larger than 10 mm and the distance between the through holes is decreased, the incident noise is completely transmitted, i.e., the noise is transmitted as if there is no film or sheet. Thus, high acoustic absorbing capability cannot be achieved.

The material of the substantially unbreathable film or the breathable sheet or film having through holes is preferably a resin film from the standpoint of processability when the laminate for the interior material is placed at a portion to be molded. Examples of the resin constituting the film include polyolefin resins such as polyethylene resins, polypropylene resins, copolymers thereof, and modified products thereof, polystyrene resins, polyester resins, polyamide resins, polycarbonate resins, and polyvinyl chloride resins and copolymers thereof, and mixtures containing a thermoplastic elastomer. The film may be a single layer or a combination of two or more layers, i.e., a multilayer. From the stand points of low cost and formability, a single layer film composed of polyethylene resin, polypropylene resin, polyamide resin, polyester resin, or a copolymer or a modified resin thereof is preferable.

The substantially unbreathable film may be interposed between the breathable decorative layer and the breathable material by heat-bonding the film and burying the breathable decorative layer and/or the breathable material in the unbreathable film or sheet so that the film and the layer and/or the material are interlaced to form an integral composite by an anchoring effect. Another method includes locally applying an adhesive so that the film or the sheet can produce vibration for the acoustic waves so as to form an integral composite. A method combining these methods may also be used.

In the method of heat-bonding the unbreathable film and immersing the breathable decorative layer and/or the breathable material in the unbreathable film so that the film and the layer and/or the material are interlaced to form an integral composite by an anchoring effect, the unbreathable film is preferably a polyolefin film from the standpoints of satisfactory, stable bonding.

Examples of the polyolefin film include films composed of homopolymers such as low-density polyethylene, high-density polyethylene, and linear polyethylene; ethylenepropylene copolymers; ethylene-vinyl acetate copolymers; copolymers of ethylene and monomers copolymerizable with olefins, such as methacrylate, acrylate, and butene; polyethylene resins containing mixtures thereof; homopolymers of propylene; propylene-vinyl acetate copolymers; copolymers of propylene and monomers copolymerizable with olefins, such as methacrylate, acrylate, and butene; and polypropylene resins containing mixtures thereof. Among these, polyethylene is preferred for its versatility. Films composed of linear low-density polyethylene (L-LDPE) and polyethylene-based hot melt are more preferred.

When the unbreathable film is interposed between the breathable decorative layer and the breathable material using adhesive layers so as to form an integral composite, polyamide films, polyester films other than the above-described types of unbreathable films are also preferable from the standpoints of cost, practicability, and imparting high acoustic absorbing capability.

Examples of the method for interposing the breathable sheet or film having through holes between the breathable decorative layer and the breathable material include a method that uses an adhesive, a method that perform needle punching typically used for processing nonwoven cloths, a method of heat-bonding the breathable layer, and a combination of these methods.

Examples of the adhesive include epoxy adhesives, silicone adhesives, urethane adhesives, and latex of thermoplastic resins, such as polystyrene and polybutadiene. The bondability of the breathable sheet or film having the through holes may be increased by adequately subjecting the sheet or film to corona treatment.

When needle punching is performed, the needle punching method employed for processing nonwoven cloths is preferably employed. By using this method, it becomes possible to bond the breathable decorative layer, the breathable material, and the sheet or film and, at the same time, to render breathability to the sheet or film by forming through holes.

When the film or the sheet is interposed between the breathable decorative layer and the breathable material by heat bonding to form an integral composite, a film composed of polyethylene or polypropylene (or a copolymer or a modified product) is preferably used for the heat bonding. Such a film melts and softens at about 100°C to 160°C. Thus, high interfacial bondability can be obtained by simple thermal treatment or by thermally molding the film with a material for interior materials.

When the needle-punched decorative multilayer material is subjected to simple thermal treatment or thermal molding with the material for interior materials, use of the above-described film and adjusting the number of needle punches and the pitch will expand the through holes, which have been formed by needle punching and evenly dispersed across the material, due to thermal shrinking of the film. Thus, even a film having small through holes can be converted to a film with through holes having appropriate acoustic absorbing capability. Thus, it is most preferable to use the above-described film, in particular, a stretched film, for improving the interfacial bondability, streamline the process of manufacture, and reduce the weight.

The methods of interposition described above may be used in combination. For example, by conducting needle punching and then thermal bonding, higher interfacial bondability can be achieved and the through holes can be reliably made by a simpler process.

The through holes may be formed by a mechanical method, i.e., punching or needle-punching described above, or by melting, i.e., by allowing hot spots to make contact.

The laminated closed-cell foam material may be any one applicable to interior materials. In particular, for use as interior materials such as vehicle interior materials, a laminated closed-cell foam material composed of a thermoplastic resin is preferably used from the standpoints of lightweightness, rigidity, heat resistance, processability, formability, and recyclability. An example thereof is a laminate constituted from a foam layer composed of a polystyrene, polypropylene, or polyphenylene ether resin, both surfaces of which are covered with non-foam layers composed of at least one selected from the group consisting of polystyrene (PS) resins, polypropylene resins, polyphenylene ether (PPE) resins, and thermoplastic elastomer resins. In particular, a laminate constituted from a foam layer composed of a polyphenylene ether resin, both surfaces of which are covered with non-foam layers composed of at least one selected from PS resins and PPE resins.

The ratio of closed cells in the foam material is preferably at least 70%, and more preferably at least 85%. At a ratio less than 70%, the laminated closed-cell foam material may not have rigidity sufficient for practical application.

Instead of the laminated closed-cell foam material, a foamed multilayer sheet, a glass fiber sheet, or the like may be adequately used as the material for the interior materials. Examples thereof include a foamed multilayer sheet constituted from a urethane foam core layer and glass fiber mats laminated on both surfaces of the urethane foam core layer and a sheet prepared by combining glass fibers with a heat-bondable resin (such as a polyethylene, polypropylene, low-melting-point polyester, or polyamide resin).

With respect to the method for laminating the decorative multilayer material onto the material for interior materials, an adequate method is selected according to the required bonding strength, whether or not molding is performed after lamination, or usage, such as houses or vehicles. For example, for use as vehicle interior materials, a typical lamination method for the vehicle interior materials may be employed. Examples thereof include a method of thermally bonding the decorative multilayer material onto a vehicle material with a hot melt film interposed therebetween, a method for bonding using an epoxy adhesive, a silicone adhesive, or a urethane adhesive, and a method of bonding using an acrylonitrile/butadiene latex, a styrene/butadiene latex, a vinyl acetate latex, an acrylate latex, or the like.

When a breathable sheet or film having through holes is interposed between the breathable decorative layer and the breathable material to form an integral decorative multilayer material, and the decorative multilayer material is laminated onto a laminated closed-cell foam material, a method of heat-bonding a thermoplastic resin layer for decorative bonding, such as a hot melt film, a method of forming an integral laminate using a urethane, silicone, or epoxy adhesive or a latex of a thermoplastic resin, or a frame lamination method of laminating the breathable material softened by melting onto the sheet may be employed.

When the resulting laminate for interior materials is used as a head liner interior material for a vehicle, such as an automobile, the laminate is formed by, for example, heat molding with the decorative multilayer material facing the room side.

The present invention will now be described by way of examples. The scope of the present invention is by no means limited to these examples.

In each example, the following measurement methods are employed:

normal incident acoustic absorption coefficient:

measured with an analyzer for measuring normal incident acoustic absorption coefficients set forth in ASTM-E-1050 Standard; and

interfacial bonding strength: measured with a universal tester (DSS-2000 produced by Shimadzu Corporation) by a 180° peel test.

EXAMPLE 1

A fiber mixture containing 93 percent by weight of polyethylene terephthalate fibers (type 707, produced by Toyobo Co. Ltd.) having a fineness of 2 denier (2.2 dtex) and a cut length of 51 mm and 7 percent by weight of low-melting-point polyethylene terephthalate fibers (type EE7, produced by Toyobo Co. Ltd.) having a fineness of 4 denier (4.4 dtex) and a cut length of 51 mm was supplied in two directions, i.e., the machine direction and a direction orthogonal to the machine direction, in equal amounts by a carding method to spray fibers, thereby forming a mat. The mat was then subjected to needle punching by adjusting the number of punches and the stroke to adjust the weight to 100 g/$m^2$ and the density to 0.083 g/$cm^3$. Hot air at 200°C was blown for 5 minutes, and then the temperature was reduced to normal temperature to obtain a multilayer fiber composite (A).

By adjusting the number of times of needle punching and the stroke, the multilayer fiber composite (A) was combined with a nonwoven decorative material (a) having a weight of 100 g/$m^2$ and a density of 0.083 g/$cm^3$ and containing 90 percent by weight of polyethylene terephthalate fibers (type 707, produced by Toyobo Co. Ltd.) having a fineness of 2 denier (2.2 dtex) and a cut length of 51 mm and 10 percent by weight of rayon fibers having a fineness of 7 denier (7.8 dtex) and a cut length of 51 mm (produced by Daiwabo Rayon Co., Ltd., CD7.8 Decitex X 51 mm) so as to form an integral composite, i.e., a decorative multilayer material in which the fibers in the multilayer fiber composite (A) were adjusted to have a planar ratio of 70% and a crossing ratio of 100%.

EXAMPLE 2

The multilayer fiber composite (A) obtained in EXAMPLE 1 was temporarily bonded with the nonwoven decorative material (a) used in EXAMPLE 1 using a fibrous polyethylene hot melt film (40 g/$m^2$). Hot air at 200°C was blown for 5 minutes and lamination was conducted using pressure-bonding rollers to prepare a decorative multilayer material in which the fibers in the multilayer fiber composite (A) were adjusted to have a planar ratio of 90% and a crossing ratio of 100%.

EXAMPLE 3

A fiber mixture containing 93 percent by weight of polyethylene terephthalate fibers (type 707, produced by Toyobo Co. Ltd.) having a fineness of 2 denier and a cut length of 51 mm and 7 percent by weight of low-melting-point polyethylene terephthalate fibers (type EE7, produced by Toyobo Co. Ltd.) having a fineness of 4 denier and a cut length of 51 mm was supplied in one direction, i.e., the machine direction, by a carding method to spray fibers, thereby forming a mat. The mat was then subjected to needle punching by adjusting the number of punches and the stroke to adjust the weight to 100 g/m$^2$ and the density to 0.083 g/cm$^3$. Hot air at 200°C was blown for 5 minutes, and then the temperature was reduced to normal temperature to obtain a multilayer fiber composite (A').

The multilayer fiber composite (A') was temporarily bonded with the nonwoven decorative material (a) the same as in EXAMPLE 1 using a fibrous polyethylene hot melt film (40 g/m$^2$) the same as in EXAMPLE 2. Hot air at 200°C was blown for 5 minutes, and lamination was conducted using pressure bonding rollers to prepare a decorative multilayer material in which the fibers in the multilayer fiber composite (A') were adjusted to have a planar ratio of 90% and a crossing ratio of 10%.

EXAMPLE 4

By adjusting the number of times of needle punching and the stroke, the multilayer fiber composite (A) obtained in EXAMPLE 1 was combined with a nonwoven decorative material (b) having a weight of 130 g/m$^2$ and a density of 0.129 g/cm$^3$ and containing 90 percent by weight of polyethylene terephthalate fibers (type 707, produced by Toyobo Co. Ltd.) having a fineness of 2 denier and a cut length of 51 mm and 10 percent by weight of rayon fibers (produced by Daiwabo Rayon Co., Ltd., CD7.8 Decitex X 51 mm) having a fineness of 7 denier and a cut length of 51 mm so as to form an integral composite, i.e., a decorative multilayer material in which the fibers in the multilayer fiber composite (A) were adjusted to have a planar ratio of 70% and a crossing ratio of 100%.

EXAMPLE 5

A fiber mixture containing 93 percent by weight of polyethylene terephthalate fibers (type 707, produced by Toyobo Co. Ltd.) having a fineness of 2 denier and a cut length of 51 mm and 7 percent by weight of low-melting-point polyethylene terephthalate fibers (type EE7, produced by Toyobo Co. Ltd.) having a fineness of 4 denier and a cut length of 51 mm was supplied in two directions, i.e., the machine direction and a direction orthogonal to the machine direction, in equal amounts by a carding method to spray fibers, thereby forming a mat. The mat was then subjected to needle punching by adjusting the number of punches and the stroke to adjust the weight to 130 g/m$^2$ and the density to 0.129 g/cm$^3$. Hot air at 200°C was blown for 5 minutes, and the temperature was reduced to normal temperature to obtain a multilayer fiber composite (B).

By adjusting the number of times of needle punching and the stroke, the multilayer fiber composite (B) and the nonwoven decorative material (b) as in EXAMPLE 4 were laminated to form an integral composite, i.e., a decorative multilayer material in which the fibers in the multilayer fiber composite (B) were adjusted to have a planar ratio of 70% and a crossing ratio of 100%.

EXAMPLE 6

A material (Y) for interior materials described below was heated so that the temperatures of the two surfaces were increased to about 140°C. Subsequently, press molding (clearance between upper and lower dies: 6 mm) was conducted by placing the laminated multilayer material obtained in EXAMPLE 1 on the material (Y). Then, trimming and punching were conducted to obtain a vehicle interior head liner material (a laminate for interior materials). Configuration of the material (Y) for interior materials

To adjust the content of the PPE resin component to 40 percent by weight and the content of the PS resin component to 60 percent by weight, 57.1 parts by weight of a modified PPE resin (Noryl EFN4230 (PPE/PS = 70/30 (weight ratio)) produced by GE Plastics Japan) was mixed with 42.9 parts by weight of a PS resin (polystyrene G8102, PS 100%, produced by A&M Styrene Kabushiki Kaisha). To 100 parts by weight of the resulting resin mixture, 3.6 parts by weight of a foaming agent mainly composed of isobutane (isobutane/n-butane = 85/15) and 0.32 part by weight of talc were blended using an extruder, and the resulting mixture was extruded from a circular die, and the extrudate was wound into a roll through a take-up roll to obtain a foam sheet having a primary thickness of 2.4 mm, a primary expansion ratio of 14, a closed-cell ratio of 88%, a cell diameter of 0.15 mm, and a weight of 150 g/m$^2$

Subsequently, 50 percent by weight of a methacrylic acid-modified polystyrene (polystyrene G9001, PS/methacrylic acid = 92/8 (weight ratio), produced by A&M Styrene Kabushiki Kaisha) was mixed with 50 percent by weight of high-impact polystyrene (HIPS) (polystyrene H8117, PS/rubber = 87.5/12.5 (weight ratio), produced by A&M Styrene Kabushiki Kaisha). While unreeling the wound foam sheet from the roll, the resulting resin mixture was melt-kneaded in an extruder so that the resin temperature was 245°C and extruded from a T die to form a film. Meanwhile, a water needle-punched nonwoven cloth (Celes S8020 produced by Yuho Kabushiki Kaisha) having a weight of 25 g/m$^2$ was supplied as the nonwoven cloth for fricative noise prevention, and a non-foam layer in the form of film in a molten state was interposed between the foam sheet and the water-punched nonwoven cloth to form a heat-resistant PS-based outer-side non-foam layer having a weight of 150 mg/m$^2$.

To adjust the content of the PPE resin component to 20 percent by weight and the content of the PS resin component to 80 percent by weight, 28.6 percent by weight of a PPE resin (Noryl EFN4230 (PPE/PS = 70/30) produced by GE Plastics Japan) was mixed with 71.4 percent by weight of a PS resin (polystyrene G8102, PS 100%, produced by A&M Styrene Kabushiki Kaisha). The resulting resin mixture was melt mixed in an extruder so that the resin temperature was 265°C and then extruded on the other surface of the foam sheet from a T die to form a film. Meanwhile, a polyolefin hot melt film (OS film, polyolefin resin/tackifier = 98/2, surface weight: 30 g/m$^2$, produced by Ohishi Sangyo Co., Ltd.) functioning as a decorative layer-bonding layer, was supplied so that the non-foam layer in the form of film in a molten state was interposed between the foam sheet and the decorative bonding layer. A modified PPE-based room-side non-foam layer having a weight of 120 g/m$^2$ was thereby obtained.

As is described above, the material (Y) for interior materials, constituted from the foam layer and the two non-foam layers laminated on the two surfaces of the foam layer, in which the outer-side skin layer includes the fricative noise prevention layer and the room-side skin layer includes the adhesive layer, can thus be obtained.

EXAMPLE 7

A fiber mixture containing 35 percent by weight of polyethylene terephthalate fibers (type 707, produced by Toyobo Co. Ltd.) having a fineness of 2 denier and a cut length of 51 mm, 15 percent by weight of low-melting-point polyethylene terephthalate fibers (type EE7, produced by Toyobo Co. Ltd.) having a fineness of 4 denier and a cut length of 51 mm, and 50 percent by weight of rayon fibers having a fineness of 3 denier and a cut length of 51 mm (produced by Daiwabo Rayon Co., Ltd., CD3.3 Decitex X 51 mm) was supplied in the two directions, i.e., the machine direction and a direction orthogonal to the machine direction, in equal amounts by a carding method to spray the fibers, thereby forming a mat. The mat was then subjected to needle punching by adjusting the number of punches and the stroke to adjust the weight to 100 g/m$^2$ and the density to 0.083 g/cm$^3$. Hot air at 200°C was blown for 5 minutes, and the temperature was reduced to normal temperature to obtain a multilayer fiber composite (C).

The multilayer fiber composite (C) was combined with the same nonwoven decorative material (a) as in EXAMPLE 1 by adjusting the number of needle punching and the stroke and then subjecting to hot air treatment to form a decorative multilayer material in which the fibers in the multilayer fiber composite (C) were adjusted to have a planar ratio of 70% and a crossing ratio of 100%.

The same material (Y) for interior materials as in EXAMPLE 6 was passed through hot rollers to melt and soften the decorative layer-bonding layer, and the decorative multilayer material was laminated thereon by press bonding to conduct preliminary bonding.

Subsequently, heating was conducted so that the temperature of the decorative multilayer material was about 165°C and the temperature of the rear face of the substrate material (the surface remote from the decorative multilayer) was 140°C, followed by integral molding using a pressing machine (clearance between upper and lower dies: 7.5 mm), trimming, and punching to obtain a vehicle interior head liner material (laminate (W) for interior materials).

EXAMPLE 8

A fiber mixture containing 93 percent by weight of polyethylene terephthalate fibers (type 707, produced by Toyobo Co. Ltd.) having a fineness of 2 denier and a cut length of 51 mm and 7 percent by weight of low-melting-point polyethylene terephthalate fibers (type EE7, produced by Toyobo Co. Ltd.) having a fineness of 4 denier and a cut length of 51 mm was supplied in the two directions, i.e., the machine direction and a direction orthogonal to the machine direction, in equal amounts by a carding method to spray the fibers, thereby forming a mat. Subsequently, needle punching was conducted at random to adjust the weight to 130 mg/m$^2$ and the density to 0.129 g/cm$^3$. Hot air at 200°C was blown for 5 minutes, and the temperature was reduced to normal temperature to obtain a multilayer fiber composite (D).

The multilayer fiber composite (D) was integrally combined with the same nonwoven decorative material (b) as in EXAMPLE 4 by conducting needle punching at random to form a decorative multilayer material in which the fibers in the multilayer fiber composite (D) were adjusted to have a planar ratio of 15% and a crossing ratio of 43%.

EXAMPLE 9

A fiber mixture containing 80 percent by weight of polyethylene terephthalate fibers (type 707, produced by Toyobo Co. Ltd.) having a fineness of 2 denier and a cut length of 51 mm and 20 percent by weight of low-melting-point polyethylene terephthalate fibers (type EE7, produced by Toyobo Co. Ltd.) having a fineness of 4 denier and a cut length of 51 mm was supplied in the two directions, i.e., the machine direction and a direction orthogonal to the machine direction, in equal amounts by a carding method to spray the fibers, thereby forming a mat. Needle punching was conducted by adjusting the number of punches and the stroke to adjust the weight to 100 g/m$^2$. Hot air at 200°C was blown for 5 minutes, and the temperature was reduced to normal temperature to obtain a fiber composite serving as a breathable material.

This fiber composite was integrally combined with a nonwoven decorative layer having a weight of 130 g/m$^2$ and containing 90 percent by weight of polyethylene terephthalate fibers (type 707, produced by Toyobo Co. Ltd.) having a fineness of 2 denier and a cut length of 51 mm and 10 percent by weight of rayon fibers having a fineness of 7 denier and a cut length of 51 mm (produced by Daiwabo Rayon Co., Ltd., CD7.8 Decitex X 51 mm) by needle punching while adjusting the number of punches to obtain a decorative multilayer material.

EXAMPLE 10

A fiber mixture containing 80 percent by weight of polyethylene terephthalate fibers (type 707, produced by Toyobo Co. Ltd.) having a fineness of 2 denier and a cut length of 51 mm and 20 percent by weight of low-melting-point polyethylene terephthalate fibers (type EE7, produced by Toyobo Co. Ltd.) having a fineness of 4 denier and a cut length of 51 mm was supplied in the two directions, i.e., the machine direction and a direction orthogonal to the machine direction, in equal amounts by a carding method to spray the fibers, thereby forming a mat. Needle punching was subsequently performed while adjusting the number of punches and the stroke to adjust the weight to 200 g/m$^2$. Hot air at 200°C was blown for 5 minutes, and the temperature was reduced to normal to obtain a fiber composite serving as a breathable material.

This fiber composite was integrally combined with a nonwoven decorative material having a weight of 100 g/m$^2$ and containing 90 percent by weight of polyethylene terephthalate fibers (type 707, produced by Toyobo Co. Ltd.) having a fineness of 2 denier and a cut length of 51 mm and 10 percent by weight of rayon fibers having a fineness of 7 denier and a cut length of 51 mm (produced by Daiwabo Rayon Co., Ltd., CD7.8 Decitex X 51 mm) by needle punching while adjusting the number of punches to obtain a decorative multilayer material.

EXAMPLE 11

By needle punching, a breathable decorative layer, i.e., a nonwoven cloth having a weight of 130 g/m$^2$ and containing 90 percent by weight of polyethylene terephthalate fibers (type 707, produced by Toyobo Co. Ltd.) having a fineness of 2 denier and a cut length of 51 mm and 10 percent by weight of rayon fibers having a fineness of 7 denier and a cut length of 51 mm (produced by Daiwabo Rayon Co., Ltd., CD7.8 Decitex X 51 mm) was integrally combined with a breathable material, i.e., a nonwoven cloth having a weight of 150 g/m$^2$ and containing 35 percent by weight of polyethylene terephthalate fibers (type 707, produced by Toyobo Co. Ltd.) having a fineness of 2 denier and a cut length of 51 mm, 50 percent by weight of rayon fibers having a fineness of 7 denier and a cut length of 51 mm (produced by Daiwabo Rayon Co., Ltd., CD7.8 Decitex X 51 mm), and 15 percent by weight of low-melting-point polyethylene terephthalate fibers (type EE7, produced by Toyobo Co. Ltd.) having a fineness of 4 denier and a cut length of 51 mm. A two-layer decorative material was obtained as a result.

Next, a laminate for interior materials was prepared as in EXAMPLE 6.

The configurations of the laminates prepared in EXAMPLES 1 to 11 are shown in Table 1. Table 2 and Figs. 5 to 7 show observed normal incident acoustic absorption coefficients of the laminates prepared in EXAMPLES 1 to 11 measured with 0 mm back cavity.

Table 1

| | Breathable decorative layer | | | Multilayer fiber composite | | | | | Planar ratio and crossing ratio of multilayer fiber composite in the decorative multilayer material | | Laminated closed-cell foam sheet | Notes |
|---|---|---|---|---|---|---|---|---|---|---|---|---|
| | Type | Weight (g/m²) | Density (g/cm³) | Type | Weight (g/m²) | Density (g/cm³) | Content of low-melting-point polyester fibers(%) | Content of reclaimed fibers (rayon)(%) | Planar ratio (%) | Crossing ratio (%) | | |
| EXAMPLE 1 | (a) | 100 | 0.083 | (A) | 100 | 0.083 | 7 | 0 | 70 | 100 | - | |
| EXAMPLE 2 | (a) | 100 | 0.083 | (A) | 100 | 0.083 | 7 | 0 | 90 | 100 | - | Fibrous hot melt film interposed |
| EXAMPLE 3 | (a) | 100 | 0.083 | (A') | 100 | 0.083 | 7 | 0 | 90 | 10 | - | Fibrous hot melt film interposed |
| EXAMPLE 4 | (b) | 130 | 0.129 | (A) | 100 | 0.083 | 7 | 0 | 70 | 100 | - | |
| EXAMPLE 5 | (b) | 130 | 0.129 | (B) | 130 | 0.129 | 7 | 0 | 70 | 100 | - | |
| EXAMPLE 6 | (a) | 100 | 0.083 | (A) | 100 | 0.083 | 7 | 0 | 70 | 100 | PPE | Laminated board produced by simultaneous molding[1] |
| EXAMPLE 7 | (a) | 100 | 0.083 | (C) | 100 | 0.083 | 15 | 50 | 70 | 100 | PPE | Laminated board produced by integral molding[2] |
| EXAMPLE 8 | (b) | 130 | 0.129 | (D) | 130 | 0.129 | 7 | 0 | 15 | 43 | - | |
| EXAMPLE 9 | - | 130 | - | - | 100 | - | 20 | 0 | - | - | - | |
| EXAMPLE 10 | - | 100 | - | - | 200 | - | 20 | 0 | - | - | - | |
| EXAMPLE 11 | - | 130 | - | - | 150 | - | 15 | 50 | - | 100 | PPE | Laminated board produced by simultaneous molding[1] |

1) The material and the decorative material were heated separately and then combined by pressing to form a decorative laminated board.

2) The material and the decorative material were laminated and heated to form a composite, and the composite was pressed to form a decorative laminated board.

EP 1 574 326 A1

Table 2

| Frequency | Acoustic absorption coefficient | | | | | | | | | | |
|---|---|---|---|---|---|---|---|---|---|---|---|
| Hz | EXAMPLE 1 | EXAMPLE 2 | EXAMPLE 3 | EXAMPLE 4 | EXAMPLE 5 | EXAMPLE 6 | EXAMPLE 7 | EXAMPLE 8 | EXAMPLE 9 | EXAMPLE 10 | EXAMPLE 11 |
| 500 | 0.05 | 0.05 | 0.04 | 0.05 | 0.04 | 0.05 | 0.04 | 0.04 | - | - | 0.05 |
| 630 | 0.05 | 0.06 | 0.05 | 0.07 | 0.05 | 0.05 | 0.05 | 0.04 | - | - | 0.06 |
| 800 | 0.06 | 0.07 | 0.05 | 0.07 | 0.05 | 0.06 | 0.05 | 0.05 | - | - | 0.06 |
| 1000 | 0.07 | 0.08 | 0.06 | 0.10 | 0.08 | 0.07 | 0.06 | 0.05 | - | - | 0.06 |
| 1250 | 0.08 | 0.11 | 0.07 | 0.11 | 0.09 | 0.08 | 0.07 | 0.07 | - | - | 0.08 |
| 1600 | 0.10 | 0.14 | 0.10 | 0.13 | 0.10 | 0.09 | 0.09 | 0.09 | - | - | 0.09 |
| 2000 | 0.12 | 0.17 | 0.12 | 0.16 | 0.12 | 0.12 | 0.10 | 0.10 | - | - | 0.12 |
| 2500 | 0.14 | 0.21 | 0.15 | 0.22 | 0.17 | 0.15 | 0.13 | 0.12 | - | - | 0.16 |
| 3150 | 0.17 | 0.28 | 0.17 | 0.27 | 0.20 | 0.19 | 0.17 | 0.16 | - | - | 0.20 |
| 4000 | 0.23 | 0.38 | 0.25 | 0.36 | 0.28 | 0.28 | 0.24 | 0.21 | 0.20 | 0.23 | 0.26 |
| 5000 | 0.39 | 0.53 | 0.40 | 0.50 | 0.42 | 0.40 | 0.38 | 0.27 | 0.27 | 0.29 | 0.31 |
| 6300 | 0.48 | 0.60 | 0.50 | 0.57 | 0.50 | 0.50 | 0.47 | 0.31 | 0.31 | 0.33 | 0.38 |

EXAMPLE 12

Between two nonwoven decorative materials (produced by Otsuka Kabushiki Kaisha) having a weight of 130 g/m$^2$, an unbreathable film, i.e., a polyethylene hot melt film (OS film produced by Ohishi Sangyo Co., Ltd., polyethylene resin 98/tackifier = 98/2, weight: 30 g/m$^2$) with a thickness of 30 μm was interposed. The nonwoven decorative materials and the unbreathable film were integrally combined with press bonding rollers, the upper roller of which was heated to 100°C, to obtain a decorative multilayer material.

EXAMPLE 13

A fiber mixture containing 80 percent by weight of polyethylene terephthalate fibers (type 707, produced by Toyobo Co. Ltd.) having a fineness of 2 denier and a cut length of 51 mm and 20 percent by weight of low-melting-point polyethylene terephthalate fibers (type EE7, produced by Toyobo Co. Ltd.) having a fineness of 4 denier and a cut length of 51 mm was supplied in the two directions, i.e., the machine direction and a direction orthogonal to the machine direction, in equal amounts by a carding method to spray the fibers, thereby forming a mat. Subsequently, the mat was subjected to needle punching while adjusting the number of punches and the stroke to adjust the weight to 100 g/m$^2$ and the density to 0.025 g/cm$^3$. Hot air at 200°C was blown for 5 minutes, and the temperature was reduced to normal to obtain a fiber composite serving as a breathable material. Between the fiber composite and a nonwoven decorative material having a weight of 130 g/m$^2$ the same as in EXAMPLE 12, an unbreathable film the same as one used in EXAMPLE 12 was interposed. Press bonding was performed with rollers, the upper roller of which was heated to 100°C, to form an integrally decorative multilayer material.

EXAMPLE 14

A fiber mixture containing 80 percent by weight of polyethylene terephthalate fibers (type 707, produced by Toyobo Co. Ltd.) having a fineness of 2 denier and a cut length of 51 mm and 20 percent by weight of low-melting-point polyethylene terephthalate fibers (type EE7, produced by Toyobo Co. Ltd.) having a fineness of 4 denier and a cut length of 51 mm was supplied in two directions, i.e., the machine direction and a direction orthogonal to the machine direction, in equal amounts by a carding method to spray fibers, thereby forming a mat. The mat was subjected to needle punching while adjusting the number of punches and the stroke to adjust the weight to 200 g/m$^2$ and the density to 0.07 g/cm$^3$. Hot air at 200°C was blown for 5 minutes, and the temperature was reduced to normal temperature to obtain a fiber composite serving as a breathable material. Between this fiber composite and a nonwoven decorative material having a weight of 100 g/m$^2$ and a density of 0.129 g/cm$^3$ and containing 80 percent by weight of polyethylene terephthalate fibers having a fineness of 2 denier and a cut length of 51 mm and 20 percent by weight of low-melting-point polyethylene terephthalate fibers having a fineness of 4 denier and a cut length of 51 mm, an unbreathable film the same as one used in EXAMPLE 12 was interposed. Press bonding was conducted using rollers, the upper rollers of which was heated to 100°C, to form an integrated decorative multilayer material.

EXAMPLE 15

An unbreathable hot melt film the same as one used in EXAMPLE 12 was interposed between a nonwoven decorative material having a weight of 130 g/m$^2$ (produced by Otsuka Kabushiki Kaisha) and a nonwoven cloth having a weight of 150 g/m$^2$ and a thickness of 2.5 mm and containing 35 percent by weight of polyethylene terephthalate fibers (type 707, produced by Toyobo Co. Ltd.) having a fineness of 2 denier and a cut length of 51 mm, 50 percent by weight of rayon fibers having a fineness of 7 denier and a cut length of 51 mm (produced by Daiwabo Rayon Co., Ltd., CD7.8 Decitex X 51 mm), and 15 percent by weight of low-melting-point polyethylene terephthalate fibers (type EE7, produced by Toyobo Co. Ltd.) having a fineness of 4 denier and a cut length of 51 mm. An integrated decorative multilayer material was thereby formed. A total of about 14 g/m$^2$ of a urethane adhesive was used on both surfaces of the hot melt film.

The decorative multilayer material was laminated on a room-side surface of the material (Y) for interior materials the same as one used in EXAMPLE 6. Heating was performed so that the temperature at the surface of the decorative material was about 155°C and that of the outer-side surface was about 140°C, and mold pressing was performed to obtain a laminate for interior materials.

EXAMPLE 16

An unbreathable hot melt film the same as one used in EXAMPLE 12 was interposed between a decorative layer the same as one in EXAMPLE 15 and a breathable material. The three layers were temporarily fixed with banok pins to obtain a three-layer decorative material.

The resulting three-layer decorative material was thermally bonded by being passed through hot rollers to obtain a decorative multilayer material. The hot melt film in the decorative multilayer material maintained the unbreathable property.

Next, a laminate for interior materials was prepared as in EXAMPLE 15.

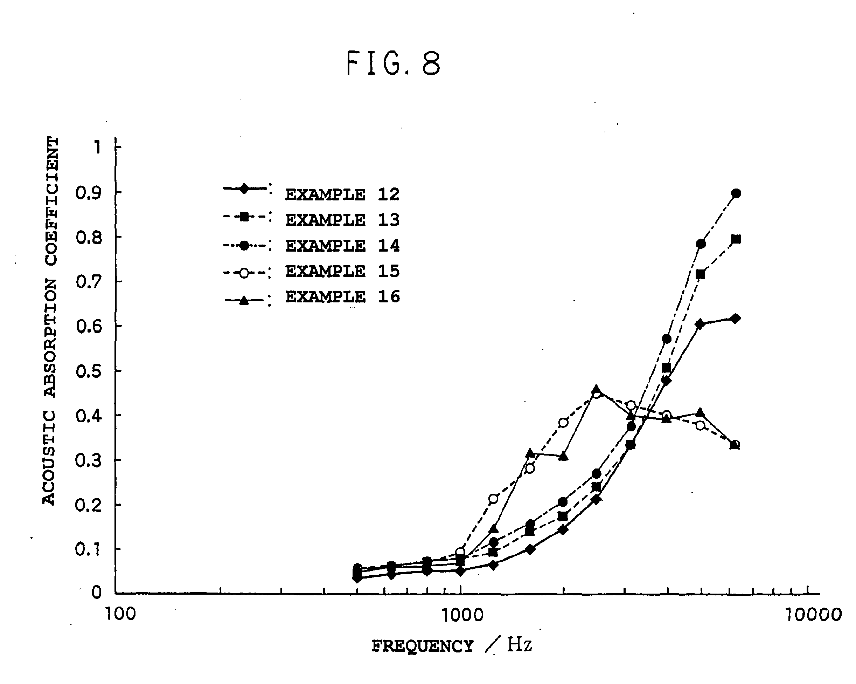

Table 3 shows the configurations of the decorative multilayer materials prepared in EXAMPLES 12 to 16. Table 4 and Fig. 8 show the observed normal incident acoustic absorption coefficients of the decorative multilayer materials measured with 0 mm back cavity.

Table 3

| | Breathable decorative layer | | Multilayer fiber composite | | | Substantially unbreathable film | | | Laminated closed-cell foam sheet |
|---|---|---|---|---|---|---|---|---|---|
| | Material | Weight (g/m²) | Material | Weight (g/m²) | Thickness (mm) | Material | Thickness (µm) | Methods of interposing the film and combining | |
| EXAMPLE 12 | Nonwoven cloth composed of PET fibers | 130 | Nonwoven cloth composed of PET fibers | 130 | - | Hot melt film | 30 | Press-bonded with hot rollers | - |
| EXAMPLE 13 | Nonwoven cloth composed of PET fibers | 130 | Nonwoven cloth composed of PET fibers | 100 | - | Hot melt film | 30 | Press-bonded with hot rollers | - |
| EXAMPLE 14 | Nonwoven cloth composed of PET fibers | 100 | Nonwoven cloth composed of PET fibers | 200 | - | Hot melt film | 30 | Press-bonded with hot rollers | - |
| EXAMPLE 15 | Nonwoven cloth composed of PET fibers | 130 | Nonwoven cloth composed of PET fibers | 150 | 2.5 | Hot melt film | 30 | Urethane adhesive | PPE |
| EXAMPLE 16 | Nonwoven cloth composed of PET fibers | 130 | Nonwoven cloth composed of PET fibers | 150 | 2.5 | Hot melt film | 30 | Thermal bonding | PPE |

Table 4

| Frequency | Acoustic absorption coefficient | | | | |
|---|---|---|---|---|---|
| Hz | EXAMPLE 12 | EXAMPLE 13 | EXAMPLE 14 | EXAMPLE 15 | EXAMPLE 16 |
| 500 | 0.04 | 0.05 | 0.05 | 0.06 | 0.06 |
| 630 | 0.05 | 0.06 | 0.06 | 0.07 | 0.06 |
| 800 | 0.05 | 0.08 | 0.08 | 0.07 | 0.06 |
| 1000 | 0.05 | 0.08 | 0.08 | 0.10 | 0.07 |
| 1250 | 0.07 | 0.10 | 0.12 | 0.22 | 0.15 |
| 1600 | 0.10 | 0.14 | 0.16 | 0.28 | 0.32 |
| 2000 | 0.15 | 0.18 | 0.21 | 0.39 | 0.31 |
| 2500 | 0.22 | 0.24 | 0.27 | 0.45 | 0.46 |
| 3150 | 0.33 | 0.34 | 0.38 | 0.42 | 0.40 |
| 4000 | 0.48 | 0.51 | 0.57 | 0.40 | 0.39 |
| 5000 | 0.61 | 0.72 | 0.79 | 0.38 | 0.41 |
| 6300 | 0.62 | 0.80 | 0.90 | 0.34 | 0.34 |

EXAMPLE 17

A breathable film having through holes, i.e., a oriented nylon film (Harden Film N1101 produced by Toyobo Co., Ltd.) 15 µm in thickness having through holes 3 mm in diameter formed by punching at a pitch of about 10 mm was interposed between a decorative layer, i.e., a nonwoven decorative material (produced by Otsuka Kabushiki Kaisha) having a weight of 130 g/m$^2$ and a breathable material, i.e., a nonwoven cloth having a weight of 150 g/m$^2$ and a thickness of 2 mm and containing 35 percent by weight of polyethylene terephthalate fibers (type 707, produced by Toyobo Co. Ltd.) having a fineness of 2 denier and a cut length of 51 mm, and 50 percent by weight of rayon fibers having a fineness of 3 denier and a cut length of 51 mm (produced by Daiwabo Rayon Co., Ltd., CD3.3 Decitex X 51 mm) and 15 percent by weight of low-melting-point polyethylene terephthalate fibers (type EE7, produced by Toyobo Co. Ltd.) having a fineness of 4 denier and a cut length of 51 mm. A decorative multilayer material was thereby formed. Here, a total of about 14 g/m$^2$ of a urethane adhesive was used on both surfaces of the nylon film.
The decorative multilayer material was laminated on a room-side surface of the material (Y) for interior materials the same as one used in EXAMPLE 6. Heating was performed so that the temperature of the surface of the decorative material was about 155°C, and the temperature of the outer-side surface was about 140°C. Mold pressing was performed to obtain a laminate for interior materials.

EXAMPLE 18

A breathable film having through holes, i.e., a polyethylene hot melt film (OS film, polyethylene resin98/tackifier = 98/2, areal weight: 30 g/m$^2$, produced by Ohishi Sangyo Co., Ltd.) 30 µm in thickness having through holes having a diameter of 5 mm formed by punching at a pitch of about 10 mm, was interposed between a decorative layer and a breathable material the same as those used in EXAMPLE 17 to form a decorative multilayer material. Here, a total of about 14 g/m$^2$ of a urethane adhesive was used on both surfaces of the film.
Then, a laminate for interior materials was prepared as in EXAMPLE 17.

EXAMPLE 19

A breathable film having through holes, i.e., a polyethylene hot melt film (OS film, polyethylene resin/tackifier = 98/2, areal weight: 30 g/m$^2$, produced by Ohishi Sangyo Co., Ltd.) 30 µm in thickness having through holes having a diameter of 3 mm formed by punching at a pitch of about 10 mm, was interposed between a decorative layer and a breathable material the same as those used in EXAMPLE 17. The three layers were temporarily fixed with banok pins to prepare a three-layer decorative material. The three-layer decorative material was passed through hot rollers to melt and soften the hot melt film in the three-layer decorative material to integrally combine the three layers and to thereby form a decorative multilayer material.

Then, a laminate for interior materials was prepared as in EXAMPLE 17.

EXAMPLE 20

An unbreathable polyethylene hot melt film 30 $\mu$m in thickness (OS film, polyethylene resin98/tackifier = 98/2, surface weight: 30 g/m$^2$, produced by Ohishi Sangyo Co., Ltd.) was interposed between a decorative layer and a breathable material the same as those used in EXAMPLE 17, and needle punching was performed to integrally combine the decorative layer and the breathable material to form a three-layer decorative material. At the same time, through holes 1 mm in diameter were formed at a pitch of about 10 mm in the breathable layer. The resulting three-layer decorative material was subjected to hot air blowing and then passed through press bonding rollers to prepare a decorative multilayer material.

Then, a laminate for interior materials was prepared as in EXAMPLE 17.

EXAMPLE 21

A hot melt film 30 $\mu$m in thickness (OS film, polyethylene resin/tackifier = 98/2, surface weight: 30 g/m$^2$, produced by Ohishi Sangyo Co., Ltd.) having through holes 5 mm in diameter formed by punching at a pitch of about 10 mm was interposed between a decorative layer and a breathable material the same as those used in EXAMPLE 17. The three layers were temporarily fixed with banok pins to obtain a three-layer decorative material.

The three-layer decorative material was passed through hot rollers with a clearance so that the layers were integrally combined by moderate heat bonding, thereby obtaining a decorative multilayer material. The hot melt film in the decorative multilayer material was breathable only at the through holes.

Next, the three-layer decorative material was laminated on the room-side surface of the material (Y) for interior materials the same as one used in EXAMPLE 6. Heating was performed so that the temperature of the surface of the decorative material was about 145°C and the temperature of the outer-side surface was about 140°C. Press molding was then performed to obtain a laminate for interior materials.

EXAMPLE 22

An non-oriented nylon film (Rayfan type 1401, produced by Toray Synthetic Film Co., Ltd.) with a thickness of 20 $\mu$m was interposed between a nonwoven decorative material (D01A decorative material) having a weight of 130 g/m$^2$ produced by Otsuka Kabushiki Kaisha and a breathable material the same as one used in EXAMPLE 17 to form a three-layer structure. The three-layer structure was needle punched by adjusting the number of times of needle punching and the needle stroke to obtain a decorative multilayer material. At the same time, through holes about 0.5 mm in diameter were formed in the breathable layer at a density of 80 holes/cm$^2$.

The resulting decorative multilayer material was placed in an oven at 180°C for 10 minutes to conduct heat treatment.

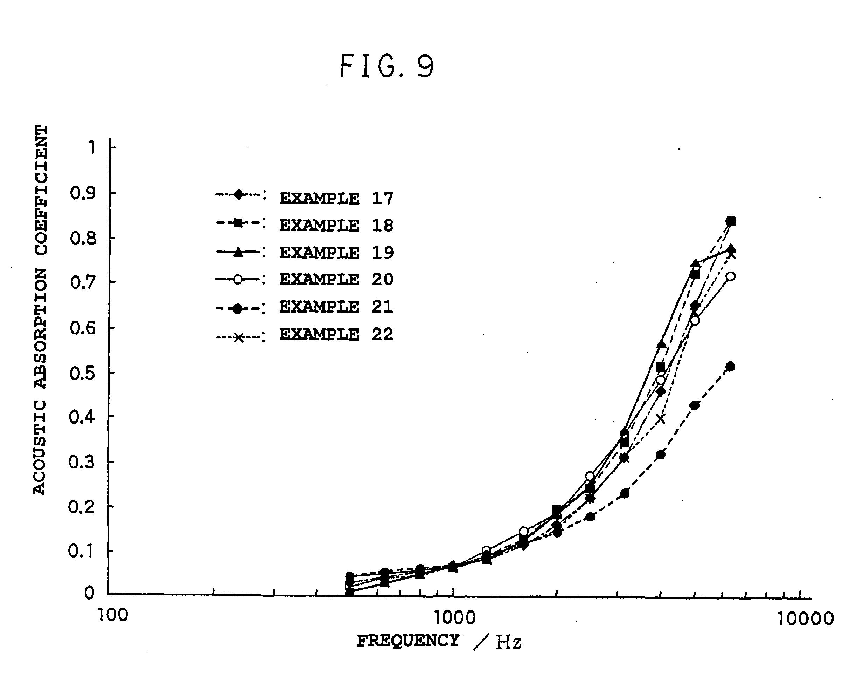

The configurations of the laminates for interior materials prepared in EXAMPLES 17 to 22 are shown in Table 5. Table 6 and Fig. 9 show observed normal incident acoustic absorption coefficients of the laminates prepared in EXAMPLES 17 to 22 measured with 0 mm back cavity.

Table 5

| | Breathable decorative layer | | Multilayer fiber composite | | | Breathable film | | | | Interfacial bondability (N) | Laminated closed-cell foam sheet | Notes |
|---|---|---|---|---|---|---|---|---|---|---|---|---|
| | Material | Weight (g/m²) | Material | Weight (g/m²) | Thickness (mm) | Material | Hole diameter (mm) | Thickness (μm) | Methods of interposing the film and combining | | | |
| EXAMPLE 17 | Nonwoven cloth composed of PET fibers | 130 | Nonwoven cloth composed of PET fibers | 150 | 2.5 | Stretched nylon | 3 | 15 | Urethane adhesive | 3.5 | PPE | |
| EXAMPLE 18 | Nonwoven cloth composed of PET fibers | 130 | Nonwoven cloth composed of PET fibers | 150 | 2.5 | Hot melt film | 5 | 30 | Urethane adhesive | 4.0 | PPE | |
| EXAMPLE 19 | Nonwoven cloth composed of PET fibers | 130 | Nonwoven cloth composed of PET fibers | 150 | 2.5 | Hot melt film | 3 | 30 | Thermal bonding | 9.1 | PPE | |
| EXAMPLE 20 | Nonwoven cloth composed of PET fibers | 130 | Nonwoven cloth composed of PET fibers | 150 | 2.5 | Hot melt film | 1 | 30 | Needle punching | 10.2 | PPE | Through holes are formed in the film by needle punching. |
| EXAMPLE 21 | Nonwoven cloth composed of PET fibers | 130 | Nonwoven cloth composed of PET fibers | 150 | 2.5 | Hot melt film | 5 | 30 | Thermal bonding | - | PPE | |
| EXAMPLE 22 | Nonwoven cloth composed of PET fibers | 130 | Nonwoven cloth composed of PET fibers | 150 | 2.5 | Unstretched nylon | 0.5 | Needle punching | Needle punching | - | - | Through holes are formed in the film by needle punching. |

Table 6

| Frequency | Acoustic absorption coefficient | | | | | |
|---|---|---|---|---|---|---|
| Hz | EXAMPLE 17 | EXAMPLE 18 | EXAMPLE 19 | EXAMPLE 20 | EXAMPLE 21 | EXAMPLE 22 |
| 500 | 0.03 | 0.01 | 0.01 | 0.05 | 0.05 | 0.02 |
| 630 | 0.05 | 0.03 | 0.03 | 0.05 | 0.06 | 0.04 |
| 800 | 0.06 | 0.06 | 0.05 | 0.06 | 0.07 | 0.05 |
| 1000 | 0.08 | 0.07 | 0.07 | 0.07 | 0.07 | 0.07 |
| 1250 | 0.09 | 0.10 | 0.09 | 0.11 | 0.10 | 0.09 |
| 1600 | 0.12 | 0.13 | 0.13 | 0.15 | 0.12 | 0.12 |
| 2000 | 0:17 | 0.20 | 0.19 | 0.19 | 0.15 | 0.15 |
| 2500 | 0.23 | 0.25 | 0.25 | 0.28 | 0.19 | 0.23 |
| 3150 | 0.32 | 0.35 | 0.38 | 0.37 | 0.24 | 0.32 |
| 4000 | 0.47 | 0.52 | 0.57 | 0.49 | 0.33 | 0.40 |
| 5000 | 0.66 | 0.72 | 0.75 | 0.62 | 0.43 | 0.64 |
| 6300 | 0.84 | 0.84 | 0.78 | 0.72 | 0.52 | 0.77 |

COMPARATIVE EXAMPLE 1

The normal incident acoustic absorption coefficient of only the nonwoven decorative material (a) having a weight of 100 g/m$^2$ and a density of 0.083 g/cm$^3$ the same as one used in EXAMPLE 1 was measured with 0 mm back cavity.

COMPARATIVE EXAMPLE 2

The normal incident acoustic absorption coefficient of only the nonwoven decorative material (b) having a weight of 130 g/m$^2$ and a density of 0.129 g/cm$^3$ the same as one used in EXAMPLE 4 was measured with 0 mm back cavity.

COMPARATIVE EXAMPLE 3

The normal incident acoustic absorption coefficient of only a nonwoven decorative material having a weight of 200 g/m$^2$ and a density of 0.166 g/cm$^3$ and containing 90 percent by weight of polyethylene terephthalate fibers (type 707, produced by Toyobo Co. Ltd.) having a fineness of 2 denier and a cut length of 51 mm and 10 percent by weight of rayon fibers having a fineness of 7 denier and a cut length of 51 mm (produced by Daiwabo Rayon Co., Ltd., CD7.8 Decitex X 51 mm) was measured with 0 mm back cavity.

COMPARATIVE EXAMPLE 4

The same material (Y) for interior materials used in EXAMPLE 6 was heated so that the temperatures of the both surfaces were 145°C and then molded with the nonwoven decorative material (a) having a weight of 100 g/m$^2$ the same as one used in EXAMPLE 1 by setting the die clearance to 6 mm to obtain a laminate for interior materials. The normal incident acoustic absorption coefficient of the laminate was measured with 0 mm back cavity.

COMPARATIVE EXAMPLE 5

The material (Y) for interior materials the same as one used in EXAMPLE 6 was heated so that the temperatures of the room-side and outer-side surfaces were about 140°C to 150°C and then press-molded to obtain a molded laminated closed-cell foam material.

COMPARATIVE EXAMPLE 6

A nonwoven cloth having a weight of 130 g/m$^2$ and a density of 0.129 g/cm$^3$ and containing 90 percent by weight of polyethylene terephthalate fibers (type 707, produced by Toyobo Co. Ltd.) having a fineness of 2 denier and a cut length of 51 mm and 10 percent by weight of rayon fibers having a fineness of 7 denier and a cut length of 51 mm (produced by Daiwabo Rayon Co., Ltd., CD7.8 Decitex X 51 mm) was placed on the material (Y) for interior materials the same as one used in EXAMPLE 6. Heating was performed so that the temperature at the surface of the decorative material was about 155°C and the temperature of the outer-side surface was about 140°C to 150°C. Press molding was performed to obtain a laminate for interior materials.

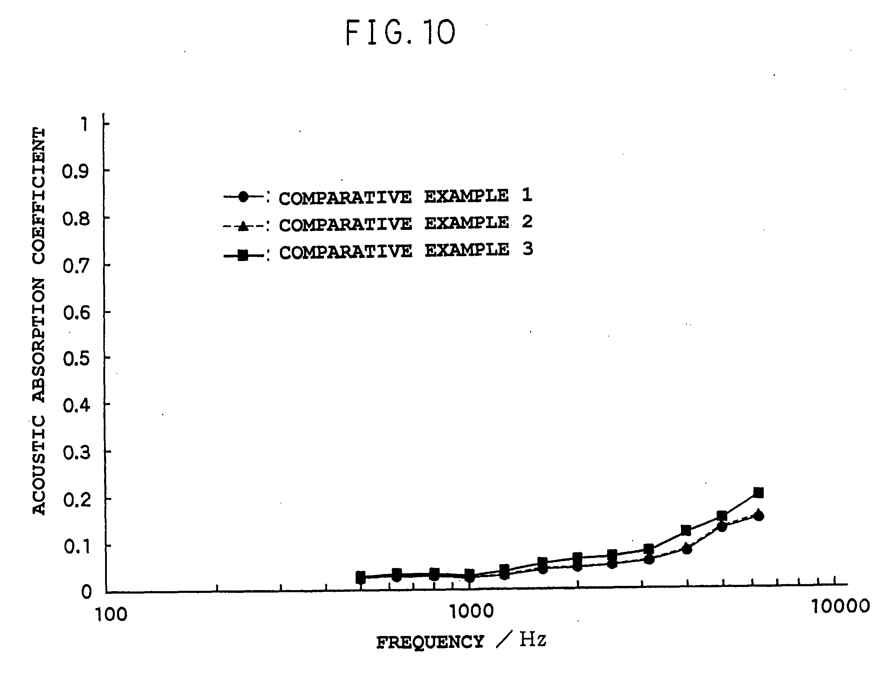

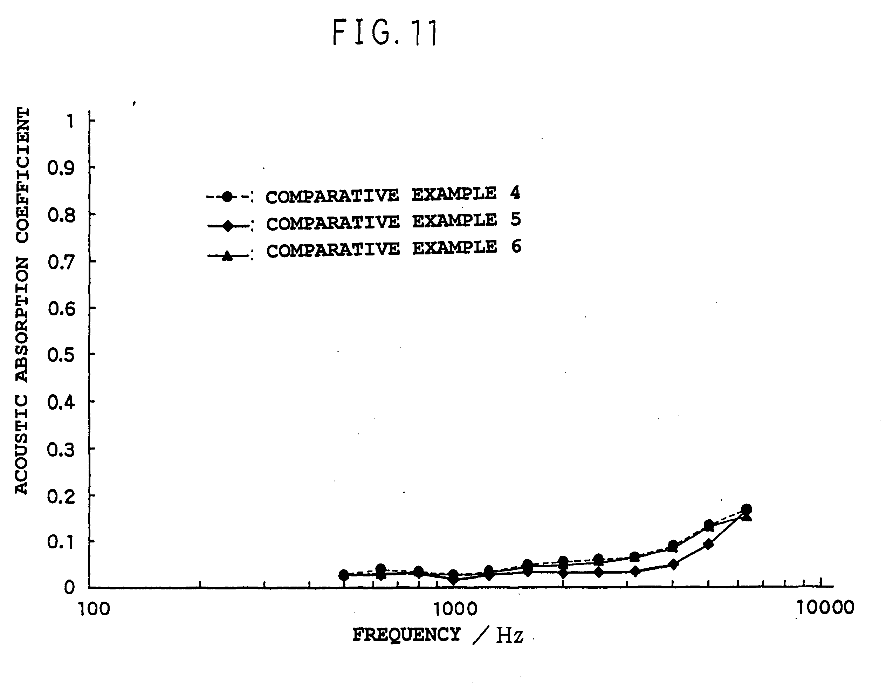

Table 7 and Figs. 10 and 11 show the observed normal incident acoustic absorption coefficients of COMPARATIVE EXAMPLES 1 to 6.

Table 7

| Frequency | Acoustic absorption coefficient | | | | | |
|---|---|---|---|---|---|---|
| Hz | COMPARATIVE EXAMPLE 1 | COMPARATIVE EXAMPLE 2 | COMPARATIVE EXAMPLE 3 | COMPARATIVE EXAMPLE 4 | COMPARATIVE EXAMPLE 5 | COMPARATIVE EXAMPLE 6 |
| 500 | 0.03 | 0.03 | 0.03 | 0.03 | 0.03 | 0.03 |
| 630 | 0.03 | 0.03 | 0.03 | 0.04 | 0.03 | 0.03 |
| 800 | 0.03 | 0.03 | 0.04 | 0.03 | 0.03 | 0.03 |
| 1000 | 0.03 | 0.03 | 0.03 | 0.03 | 0.02 | 0.03 |
| 1250 | 0.03 | 0.03 | 0.04 | 0.03 | 0.03 | 0.03 |
| 1600 | 0.04 | 0.05 | 0.06 | 0.05 | 0.03 | 0.05 |
| 2000 | 0.05 | 0.05 | 0.07 | 0.06 | 0.03 | 0.05 |
| 2500 | 0.05 | 0.05 | 0.07 | 0.06 | 0.03 | 0.05 |
| 3150 | 0.06 | 0.06 | 0.08 | 0.07 | 0.04 | 0.06 |
| 4000 | 0.08 | 0.09 | 0.12 | 0.09 | 0.05 | 0.09 |
| 5000 | 0.13 | 0.13 | 0.15 | 0.14 | 0.09 | 0.13 |
| 6300 | 0.15 | 0.16 | 0.20 | 0.17 | 0.17 | 0.16 |

These results show that compared to COMPARATIVE EXAMPLES, EXAMPLES have higher acoustic absorbing capability in middle to high acoustic ranges of 4,000 Hz or more.

Industrial Applicability

An inventive decorative multilayer material and an inventive laminate for interior materials including the inventive decorative multilayer material laminated onto a laminated closed-cell foam material have excellent acoustic absorbing capability (particularly in high frequencies) for securing silence in the room, processability, and designability and are inexpensive and light-weight. When a thermoplastic material containing no glass or the like is used or when materials of different types are not used in combination, a decorative multilayer material having high recyclability can be produced. When the inventive decorative multilayer material is laminated on an unbreathable material for interior materials, a laminate for interior materials having high acoustic absorbing capability can still be obtained.

**Claims**

1. A decorative multilayer material comprising a breathable decorative layer and a breathable material laminated onto one of the surfaces of the breathable decorative layer.

2. The decorative multilayer material according to claim 1, wherein the breathable material is a multilayer fiber composite prepared by laminating layers of fibers.

3. The decorative multilayer material according to claim 2, wherein the ratio of the fibers lying in the direction of the plane of the multilayer fiber composite (planar ratio) is at least 50% of all fibers.

4. The decorative multilayer material according to claim 2 or 3, wherein the ratio (crossing ratio) between the amount of fibers lying in the machine direction of the multilayer fiber composite and the amount of fibers lying in a direction crossing the machine direction is in the range of 50% to 200%.

5. The decorative multilayer material according to claim 1, wherein a substantially unbreathable film is interposed between the breathable decorative layer and the breathable material to form an integral composite.

6. The decorative multilayer material according to claim 5, wherein the thickness of the substantially unbreathable film is 10 to 50 $\mu$m.

7. The decorative multilayer material according to claim 1, wherein a breathable sheet or film having through holes is interposed between the breathable decorative layer and the breathable material.

8. The decorative multilayer material according to claim 7, wherein the interfacial bonding strength between the breathable sheet or film having the through holes and the decorative layer and that between the breathable sheet or film having the through holes and the breathable material are each 3 N/25 mm (width) or more in a 180° peel test.

9. The decorative multilayer material according to claim 7 or 8, wherein the diameter (equivalent circular diameter) of the through holes is 10 mm or less.

10. The decorative multilayer material according to claim 1, wherein the breathable decorative layer and/or the breathable material comprises a nonwoven cloth.

11. The decorative multilayer material according to claim 1, wherein the breathable decorative layer and/or the breathable material comprises polyester fibers.

12. The decorative multilayer material according to claim 1, wherein the breathable decorative layer and/or the breathable material comprises natural fibers or reclaimed fibers.

13. The decorative multilayer material according to claim 1, wherein the breathable decorative layer and/or the breathable material comprises heat-bondable fibers.

14. A laminate for interior materials, comprising a laminated closed-cell foam material and the decorative multilayer material according to claim 1 laminated thereon.

**15.** The laminate for interior materials according to claim 14, wherein the laminated closed-cell foam material comprises a polyphenylene ether resin.

# FIG. 1

# FIG. 2

# FIG. 3

# FIG. 4

# FIG.5

EP 1 574 326 A1

# FIG. 6

EP 1 574 326 A1

# FIG. 7

EP 1 574 326 A1

# FIG. 8

EP 1 574 326 A1

# FIG. 9

EP 1 574 326 A1

FIG.10

COMPARATIVE EXAMPLE 1
COMPARATIVE EXAMPLE 2
COMPARATIVE EXAMPLE 3

FIG.11

— – — : COMPARATIVE EXAMPLE 4
——— : COMPARATIVE EXAMPLE 5
—···— : COMPARATIVE EXAMPLE 6

ACOUSTIC ABSORPTION COEFFICIENT

FREQUENCY / Hz

## INTERNATIONAL SEARCH REPORT

International application No.

PCT/JP03/16138

**A. CLASSIFICATION OF SUBJECT MATTER**
Int.Cl⁷ B32B5/26

According to International Patent Classification (IPC) or to both national classification and IPC

**B. FIELDS SEARCHED**

Minimum documentation searched (classification system followed by classification symbols)
Int.Cl⁷ B32B, D04H, B60R13/00-13/08

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | EP 668153 A (Takashimaya Nippatsu Kogyo Co., Ltd.), 23 August, 1995 (23.08.95), & JP 7-227488 A  & JP 7-303768 A & US 5508080 A1 | 1-4 |
| X | JP 2000-167957 A (Honda Motor Co., Ltd., TS Tech Co., Ltd., Seiren Co., Ltd.), 20 June, 2000 (20.06.00), (Family: none) | 1-4 |
| X | JP 7-324269 A (Takashimaya Nippatsu Kogyo Co., Ltd.), 12 December, 1995 (12.12.95), (Family: none) | 1-4 |

☒ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 April, 2004 (02.04.04) | 20 April, 2004 (20.04.04) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

| | International application No. |
|---|---|
| | PCT/JP03/16138 |

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2000-62070 A  (Takashimaya Nippatsu Kogyo Co., Ltd.), 29 February, 2000 (29.02.00), (Family: none) | 1-4 |
| X | JP 7-186844 A  (Ikeda Bussan Co., Ltd.), 25 July, 1995 (25.07.95), Par. No. [0019] (Family: none) | 1-4 |
| X | JP 9-309167 A  (Takashimaya Nippatsu Kogyo Co., Ltd.), 02 December, 1997 (02.12.97), (Family: none) | 1-4 |
| X | JP 2002-264285 A  (Kuraray Co., Ltd., Kabushiki Kaisha Kawashima Orimono, Nissan Motor Co., Ltd.), 18 September, 2002 (18.09.02), (Family: none) | 1-4 |
| X | JP 63-196752 A  (Mitsui Petrochemical Industries, Ltd.), 15 August, 1988 (15.08.88), (Family: none) | 1-4 |
| X | JP 8-323903 A  (Kanebo, Ltd., Nissan Motor Co., Ltd.), 10 December, 1996 (10.12.96), (Family: none) | 1-4 |
| X | JP 2000-229369 A  (Japan Vilene Co., Ltd.), 22 August, 2000 (22.08.00), (Family: none) | 1-4 |
| X | JP 10-147191 A  (Kanebo, Ltd., Nissan Motor Co., Ltd.), 02 June, 1998 (02.06.98), (Family: none) | 1-4 |
| P,X | JP 2003-82568 A  (Toyobo Co., Ltd.), 19 March, 2003 (19.03.03), (Family: none) | 1-4 |
| X | JP 11-240088 A  (Bridgestone Corp.), 07 September, 1999 (07.09.99), (Family: none) | 1-4 |
| P,A | JP 2002-361803 A  (Kaneka Corp.), 18 December, 2002 (18.12.02), (Family: none) | 1-4 |
| X | JP 7-52332 A  (Toyobo Co., Ltd.), 28 February, 1995 (28.02.95), (Family: none) | 1-4 |

Form PCT/ISA/210 (continuation of second sheet) (July 1998)

**INTERNATIONAL SEARCH REPORT**

International application No.

PCT/JP03/16138

**Box I** Observations where certain claims were found unsearchable (Continuation of item 2 of first sheet)

This international search report has not been established in respect of certain claims under Article 17(2)(a) for the following reasons:

1. ☐ Claims Nos.:

because they relate to subject matter not required to be searched by this Authority, namely:

2. ☐ Claims Nos.:

because they relate to parts of the international application that do not comply with the prescribed requirements to such an extent that no meaningful international search can be carried out, specifically:

3. ☐ Claims Nos.:

because they are dependent claims and are not drafted in accordance with the second and third sentences of Rule 6.4(a).

**Box II** Observations where unity of invention is lacking (Continuation of item 3 of first sheet)

This International Searching Authority found multiple inventions in this international application, as follows:

The laminated surface skin material according to claim 1, which is the technical feature common to claims 2, 5, 7, 10, 11, 12, 13, and 14 is known to the public, lacks novelty, and makes no special contribution over the prior art, on account of the document shown in this international search report, and therefore is not "a special technical feature" in the meaning of PCT Rule 13.2, the second sentence. And, there can be found no technical feature common to claims 2, 5, 7, 10, 11, 12, 13, and 14, except the laminated surface skin material according to claim 1.

(continued to extra sheet)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.:

Claims 1 to 4

**Remark on Protest** ☐ The additional search fees were accompanied by the applicant's protest.

☐ No protest accompanied the payment of additional search fees.

Form PCT/ISA/210 (continuation of first sheet (1)) (July 1998)

**INTERNATIONAL SEARCH REPORT**

| International application No. |
| --- |
| PCT/JP03/16138 |

Continuation of Box No. II of continuation of first sheet (1)

Accordingly, this international application includes eight inventions of "claims 1 to 4", "claims 5 and 6", "claims 7 to 9", "claim 10", "claim 11", "claim 12", "claim 13" and "claims 14 and 15", which do not comply with the requirement of unity of invention.

Form PCT/ISA/210 (extra sheet) (July 1998)